# EUROPEAN PATENT APPLICATION

(11) **EP 4 761 308 A1**
(43) Date of publication of application: **17.06.2026**
(21) Application number: 23948111.2
(22) Date of filing: 10.08.2023
(51) Int. Cl.: H04W 12/00, H04L 9/32

(54) **AUTHENTICATION METHOD AND DEVICE**

(71) Applicant: GUANGDONG OPPO MOBILE TELECOMMUNICATIONS CORP., LTD., Dongguan, Guangdong 523860 (CN)
(72) Inventor: XIONG, Lihui, Dongguan, Guangdong 523860 (CN); GAN, Lu, Dongguan, Guangdong 523860 (CN); SHI, Cong, Dongguan, Guangdong 523860 (CN)
(74) Representative: Penza, Giancarlo
(86) International application number: PCT/CN2023/112382
(87) International publication number: WO 2025/030541

(57) **Abstract**

The present disclosure relates to authentication methods, devices, a computer-readable storage medium, a computer program product, and a computer program. The method includes: receiving authentication requests from a plurality of second devices, the authentication request of each second device among the plurality of second devices carrying a first security parameter; and sending a group request message to an authentication functional entity, the group request message carrying a first signature for authenticating the plurality of second devices, and the first signature being calculated based on a first security parameter corresponding to the each second device.

## Description

### TECHNICAL FIELD

The present disclosure relates to the field of communications, and more particularly, to authentication methods, devices, a computer readable storage medium, a computer program product, and a computer program.

### BACKGROUND

With the development of technology, there is a demand for a zero-power device to access a communication system or a communication network. In order for the zero-power device to access the communication system or the network, it is needed to perform authentication interaction with a network device of the communication system. However, there may be a large number of zero-power devices in a certain communication range, so that the network device may need to perform authentication interaction with a large number of zero-power devices in a short time, which may lead to an increase in signaling overhead of the network device in a short time, resulting in network congestion, and thus reducing authentication efficiency.

### SUMMARY

Embodiments of the present disclosure provide authentication methods, devices, a computer readable storage medium, a computer program product, and a computer program.

An embodiment of the present disclosure provides an authentication method implemented by a first device, and the authentication method includes:
receiving authentication requests from a plurality of second devices, wherein the authentication request of each second device among the plurality of second devices carries a first security parameter; and
sending a group request message to an authentication functional entity, wherein the group request message carries a first signature for authenticating the plurality of second devices, and the first signature is calculated based on the first security parameter corresponding to the each second device.

An embodiment of the present disclosure provides an authentication method implemented by an authentication functional entity, and the authentication method includes:
receiving a group request message from a first device, wherein the group request message carries a first signature for authenticating a plurality of second devices, the first signature being calculated based on the first security parameter corresponding to the each second device.

An embodiment of the present disclosure provides an authentication method implemented by a target second device, and the authentication method includes:
sending an authentication request to a first device, wherein the authentication request carries a first security parameter corresponding to the target second device, and the first security parameter corresponding to the target second device is used to calculate a first signature.

An embodiment of the present disclosure provides an authentication method implemented by a first device, and the authentication method includes:
receiving a group response message from an authentication functional entity, wherein the group response message carries a second signature for authenticating the authentication functional entity.

An embodiment of the present disclosure provides an authentication method implemented by an authentication functional entity, and the authentication method includes:
sending a group response message to a first device, wherein the group response message carries a second signature for authenticating the authentication functional entity.

An embodiment of the present disclosure provides a first device which includes:
a first communication unit, configured to receive authentication requests from a plurality of second devices, wherein the authentication request of each second device among the plurality of second devices carries a first security parameter; and sending a group request message to an authentication functional entity, wherein the group request message carries a first signature for authenticating the plurality of second devices, and the first signature is calculated based on the first security parameter corresponding to the each second device.

An embodiment of the present disclosure provides an authentication functional entity which includes:
a second communication unit, configured to receive a group request message from a first device, wherein the group request message carries a first signature for authenticating a plurality of second devices, the first signature being calculated based on the first security parameter corresponding to the each second device.

An embodiment of the present disclosure provides a target second device which includes:
a third communication unit, configured to send an authentication request to a first device, wherein the authentication request carries a first security parameter corresponding to the target second device, and the first security parameter corresponding to the target second device is used to calculate a first signature.

An embodiment of the present disclosure provides a first device which includes:
a first communication unit, configured to receive a group response message from an authentication functional entity, wherein the group response message carries a second signature for authenticating the authentication functional entity.

An embodiment of the present disclosure provides an authentication functional entity which includes:
a second communication unit, configured to send a group response message to a first device, wherein the group response message carries a second signature for authenticating the authentication functional entity.

Embodiments of the present disclosure provide a first device which includes a transceiver, a processor, and a memory. The memory is configured to store a computer program, and the processor is configured to call and run the computer program stored in the memory to cause the first device to perform the methods described above.

Embodiments of the present disclosure provide an authentication functional entity which includes a transceiver, a processor, and a memory. The memory is configured to store a computer program, and the processor is configured to call and run the computer program stored in the memory to cause the authentication functional entity to perform the methods described above.

An embodiment of the present disclosure provides a second device which includes a transceiver, a processor, and a memory. The memory is configured to store a computer program, and the processor is configured to call and run the computer program stored in the memory to cause the second device to perform the method described above.

An embodiment of the present disclosure provides a chip for implementing the above methods.

Specifically, the chip includes a processor for calling and running a computer program from a memory to enable a device on which the chip is mounted to perform the above-described methods.

An embodiment of the present disclosure provides a computer-readable storage medium for storing a computer program that causes a device to perform the above-described methods when the computer program is executed by the device.

An embodiment of the present disclosure provides a computer program product which includes computer program instructions that cause a computer to perform the above-described methods.

An embodiment of the present disclosure provides a computer program that, when run on a computer, causes the computer to perform the above-described methods.

By adopting the solution provided by the embodiments, the first device may calculate a first signature based on a first security parameter carried by an authentication request of each of a plurality of second devices, and send a group request message carrying the first signature to an authentication functional entity, so that the authentication functional entity can authenticate the plurality of second devices based on the first signature. In this way, it avoids network congestion that may be caused by the authentication functional entity on the network side authenticating each second device individually when a large number of second devices access the network in a short period of time, reduces the communication signaling overhead between the first device and the authentication functional entity, and improves the efficiency of authentication.

### BRIEF DESCRIPTION OF THE DRAWINGS

FIG. 1 is a schematic diagram of an application scenario according to an embodiment of the present disclosure.
FIG. 2 is a schematic flowchart of an authentication method according to an embodiment of the present disclosure.
FIG. 3 is a schematic flow chart of an authentication method according to another embodiment of the present disclosure.
FIG. 4 is a schematic flow chart of an authentication method according to another embodiment of the present disclosure.
FIG. 5 is a schematic flowchart of an authentication method according to another embodiment of the present disclosure.
FIG. 6 is a schematic flow chart of an authentication method according to another embodiment of the present disclosure.
FIG. 7 is a schematic diagram of a framework of an authentication method according to an embodiment of the present disclosure.
FIGS. 8a and 8b are two schematic flowcharts of an authentication method according to an embodiment of the present disclosure.
FIG. 9 is a schematic diagram of various scenarios of a zero-power device according to an embodiment of the present disclosure.
FIG. 10 is a schematic diagram of an asymmetric cryptosystem according to an embodiment of the present disclosure.
FIG. 11 is a schematic block diagram of a first device according to an embodiment of the present disclosure.
FIG. 12 is a schematic block diagram of an authentication functional entity according to an embodiment of the present disclosure.
FIG. 13 is a schematic block diagram of a target second device according to an embodiment of the present disclosure.
FIG. 14 is a schematic block diagram of a communication device according to an embodiment of the present disclosure.
FIG. 15 is a schematic block diagram of a chip according to an embodiment of the present disclosure.
FIG. 16 is a schematic block diagram of a communication system according to an embodiment of the present disclosure.

### DETAILED DESCRIPTION

The technical solution of the embodiments of the present disclosure may be applied to various communication systems, such as Long Term Evoluation (LTE), LTE-A, New Radio (NR), evolved NR, Wireless Local Area Network (WLAN), Wireless Fidelity (WiFi), or other communication systems.

Various embodiments in the present disclosure are described in conjunction with network devices and terminals. The terminals may be mobile or fixed, and the terminals may also be referred to as mobile stations, user units, etc. The terminal may be a station in WLAN, or may be a smart terminal, a wireless modem, a notebook computer, a tablet computer, or the like. In the embodiments of the present disclosure, the terminal may be a Virtual Reality (VR) terminal/Augmented Reality (AR) terminal, an industrial control terminal, an unmanned driving terminal, a telemedicine terminal, a smart grid terminal, a transportation security terminal, a smart city terminal, a wireless terminal of a smart home, or the like. As an example and not limitation, in the embodiments of the present disclosure, the terminal may also be a wearable device.

In the embodiments of the present disclosure, the network device may be a device for communicating with a terminal, may be an access point in WLAN, may be an evolved base station in LTE, or a relay station, or a vehicle-mounted device, a wearable device, a network device (gNB) in an NR network, a network device in a future evolved Public Land Mobile Network (PLMN) network, or a network device in a non-terrestrial network, or the like. By way of example and not limitation, in embodiments of the present disclosure, the network device may have mobile characteristics, for example, the network device may be a mobile device.

It is to be understood that the terms "system" and "network" are often used interchangeably herein. The term "and/or" represents only an association relationship describing associated objects, and means that there may be three relationships. For example, A and/or B, which may mean that A alone exists, A and B simultaneously exist, and B alone exists. In addition, the character "/" generally here indicates that the related objects before and after it are in an "or" relationship. It should be understood that the "indication" mentioned in the embodiments of the present disclosure may be a direct indication, an indirect indication, or may indicate the existence of an associated relationship. For example, A indicates B, which may mean that A directly indicates B, for example, B can be obtained by A; it may also mean that A indicates B indirectly, for example A indicates C, and B can be obtained through C; it may also indicate that there is an association relationship between A and B. In the description of the embodiments of the present disclosure, the term "correspond" may mean that there is a direct or indirect correspondence between two parties, may also mean that there is a correlation relationship between the two, or may also refer to relationships between indicating and being indicated, configuring and being configured, or the like.

In order to facilitate understanding of the technical solution of the embodiments of the present disclosure, the related technologies of the embodiments of the present disclosure will be described below, and the related technologies below as options can be arbitrarily combined with the technical solution of the embodiments of the present disclosure, and all of them belong to the scope of protection of the embodiments of the present disclosure.

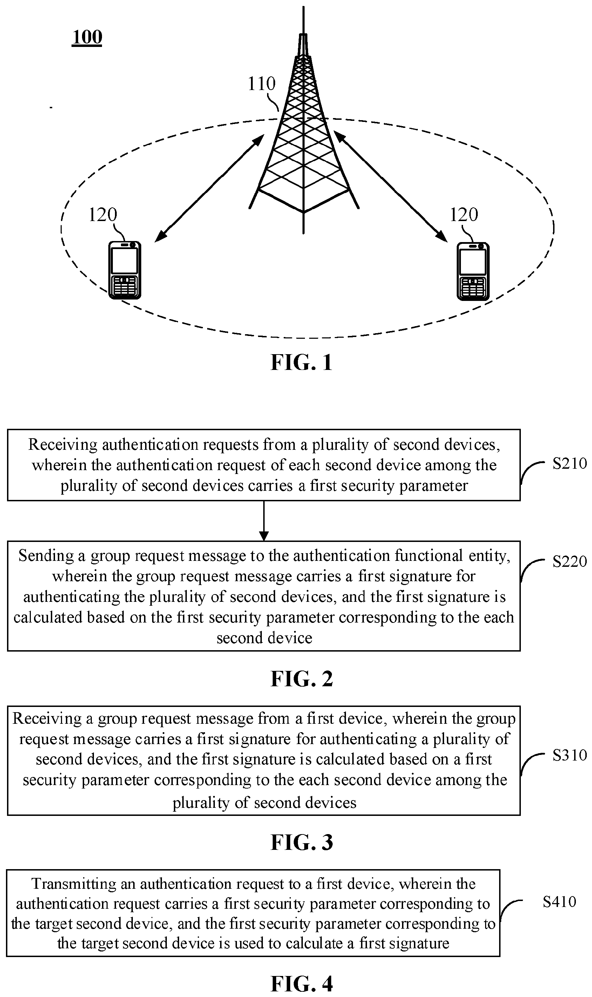

FIG. 1 exemplarily illustrates a communication system 100. The communication system includes a network device 110 and two terminals 120. In a possible implementation, the communication system 100 may include a plurality of network devices 110, and the coverage range of each network device 110 may include other number of terminals 120 than two, which is not limited in the embodiments of the present disclosure. In a possible implementation, the communication system 100 may further include a mobility management entity, an access and mobility management function, and other network entities, which are not limited in the embodiments of the present disclosure. The network device may further include an access network device and a core network device. That is, the communication system may further include a plurality of core networks for communicating with access network devices. The access network device may be a base station of an LTE, LTE-A, or NR system. Taking the communication system illustrated in FIG. 1 as an example, the communication device may include a network device and a terminal having a communication function, and the communication device may further include other devices in the communication system, such as other network entities like a network controller and a mobility management entity, and this is not limited in the embodiments of the present disclosure.

FIG. 2 is a schematic flowchart of an authentication method implemented by a first device according to an embodiment of the present disclosure. The method includes at least part of contents below.

S210 includes: receiving authentication requests from a plurality of second devices, wherein the authentication request of each second device among the plurality of second devices carries a first security parameter;

S220 includes: sending a group request message to an authentication functional entity, wherein the group request message carries a first signature for authenticating the plurality of second devices, and the first signature is calculated based on the first security parameter corresponding to the each second device.

FIG. 3 is a schematic flowchart of an authentication method implemented by an authentication functional entity according to another embodiment of the present disclosure. The method includes at least part of contents below.

S310 includes: receiving a group request message from a first device, wherein the group request message carries a first signature for authenticating a plurality of second devices, and the first signature is calculated based on a first security parameter corresponding to each second device among the plurality of second devices.

FIG. 4 is a schematic flowchart of an authentication method implemented by a target second device according to another embodiment of the present disclosure. The method includes at least part of contents below.

S410 includes: transmitting an authentication request to a first device, wherein the authentication request carries a first security parameter corresponding to the target second device, and the first security parameter corresponding to the target second device is used to calculate a first signature.

The first device may be one of a terminal and an access network device. The access network device may refer to an access network device, for example, the access network device may be any one of the following: a base station, a gNB, an eNB, an Integrated Access Backhaul (IAB) node, and the like.

Each of the plurality of second devices may be a zero-power device. Alternatively, each second device among the plurality of second devices may be an Internet of Things device. The target second device may be any one of the plurality of second devices, and the target second device may also be a zero-power device. Or the target second device may likewise be an Internet of Things device. The number of the plurality of second devices is not limited in the embodiments, and in some possible examples, the plurality of second devices may also be expressed as N second devices, and N is an integer greater than or equal to 2.

In some embodiments, any one of the second devices may be any one of followings: an Ambient Power-enabled IoT (AIoT) device, an active zero-power device, a passive zero-power device, a semi-passive zero-power device, and the like. In some embodiments, any one of the second devices may also be a terminal with lower computing capability. In some possible implementations, any of the second devices may be referred to as a Tag. All possible names or possible device types of the second device are not exhaustively listed here.

In some embodiments, the first device may be a terminal, and in such embodiments, the first device and any one of the second devices may communicate by transmitting a sidelink message. In some embodiments, the first device may be an access network device, and in such embodiments, the first device and any of the second devices may communicate by transmitting an AS (Access Stratum) message.

The above authentication functional entity may be deployed in at least one of followings: an Application Function (AF), an Access and Mobility Management Function (AMF), a session management function (SMF), an Authentication Server Function (AUSF), a Unified Data Management function (UDM), a Unified Data Repository (UDR), a Home Subscriber System (HSS), an Authentication Credential Repository and Processing Function (ARPF), a Bootstrapping Server Function (BSF), a Security Anchor Function (SEAF), and a dedicated network element of core network.

The authentication functional entity may refer to a network element having an authentication function. The authentication function may include at least an AIOT group authentication function and/or a group authentication function. In some possible examples, A-NF may represent an A-IoT group authentication function (NF, Network Function) and/or a group authentication function. In other possible examples, the authentication function may further include at least one of followings: an authentication function and/or a group authentication function of a zero-power group, an authentication function and/or a group authentication function of an IoT device group, and the like.

For example, the authentication functional entity may be configured by adding an authentication function to the AF of an application server.

For example, the authentication functional entity may be a newly added dedicated network element of core network, and the dedicated network element of core network has or is set or is configured with an authentication function. In this example, the dedicated network element of core network may be referred to as an AIOT authentication functional entity, a dedicated authentication functional entity of zero-power function, a zero-power dedicated network element, a dedicated network element of a zero-power device, or the like. That is, the dedicated network element of core network may refer to a network element having at least a zero-power related function (such as having an AIOT authentication function), or a core network element capable of at least serving an AIOT (or a zero-power device). It should be understood that the dedicated network element of core network may be set separately, or may be set by adding a zero-power authentication related function (such as an AIOT or tag authentication function) to an existing core network element, and this embodiment does not exhaustively list all possible situations.

For example, the authentication functional entity may be an existing core network element, and the core network element may be newly added or equipped or newly configured with an authentication function. For example, the core network element may be added with an authentication function on the basis of at least one of the following functions: AMF, SMF, AUSF, UDM, UDR, HSS, ARPF, BSF, SEAF, etc.

In some possible implementations, the authentication request of each second device amomg the plurality of second devices carries a first security parameter, which means that the authentication request of each second device carries a first security parameter corresponding to the second device. In other words, the authentication request of any one of the second devices carries a first security parameter corresponding to that second device itself.

Taking any one of the second devices as the target second device as an example, the authentication request carries a first security parameter corresponding to the target second device, specifically, the authentication request of the target second device carries a first security parameter corresponding to the target second device.

A first security parameter corresponding to the target second device may be calculated based on a first random number generated by the target second device. Specifically, the step of calculating the first security parameter corresponding to the target second device may include that the target second device uses a security algorithm to calculate the first security parameter corresponding to the target second device based on a first random number corresponding to the target second device.

The first random number corresponding to the target second device may be generated or selected by the target second device, and the present embodiment does not limit the manner in which the target second device generates or selects the first random number.

Alternatively, the security algorithm may be a Diffie-Hellman (DH) algorithm, which may also be referred to as a Diffie-Hellman key exchange algorithm.

In this example, the first security parameter corresponding to the target second device is calculated using the security algorithm based on a shared parameter and the first random number corresponding to the target second device.

The shared parameter may include a large prime number and a primitive root, wherein the primitive root is a primitive root of the large prime number. Here, the shared parameter may refer to a parameter shared by the each second device and the authentication functional entity.

The first random number corresponding to the target second device is smaller than the large prime number.

The above-described DH algorithm may include at least an exponentiation calculation and a modulus function, and the like algorithms. That is, calculating the first security parameter corresponding to the target second device may include: the target second device uses the DH algorithm, performs the exponentiation calculation based on a first random number and a primitive root corresponding to the target second device to obtain a first value, and calculates the first security parameter corresponding to the target second device based on the first value and a large prime number using a modulus function. For example, it is assumed that the large prime number is expressed as p, the primitive root is expressed as g, the first random number corresponding to the target second device is expressed as r1, and the modulus function is expressed as mod (). The target second device may calculate the first security parameter using the following formula: R₁ = g^{r1}mod (p).

Alternatively, the security algorithm may be a key exchange algorithm based on Elliptic Curve Cryptography (Elliptic Curve Diffie-Hellman, ECDH).

In this example, the first security parameter corresponding to the target second device is calculated using the security algorithm based on the first random number and a generator corresponding to the target second device. The generator is a generator of the additive cyclic group GP, and the generator may be a public parameter . That is, the generator may be a parameter preconfigured in each second device and the authentication functional entity. The manner of its preconfiguration or setting is not limited in this embodiment.

The above-described ECDH algorithm may include at least a point multiplication operation and the like. For example, calculating the first security parameter corresponding to the target second device may include: the target second device performs point multiplication operation using the ECDH algorithm on the first random number corresponding to the target second device and the generator to obtain the first security parameter corresponding to the target second device. For example, it is assumed that the generator is expressed as P, the first random number corresponding to the target second device is expressed as r1, and the point multiplication operation is expressed as "*". The target second device may calculate the first safety parameter using the following formula: R₁ = r1 * P.

It should be noted that the above-described embodiment only takes any one of the plurality of second devices as the target second device as an example, and describes a manner in which the target second device calculates its corresponding first security parameter. Each second device may calculate its first security parameter in the same manner as the target second device, which is not repeated in this embodiment.

In some possible implementations, the authentication request for each second device may also carry an identity of each second device. In other words, the authentication request of any of the second devices carries the identity of the second device itself.

Still taking any one of the plurality of second devices as the target second device as an example, the authentication request may carry an identity of the target second device. That is, the authentication request of the target second device may carry the identity of the target second device in addition to the first security parameter corresponding to the target second device.

In an example, each device (such as each zero-power device) in a network or system may be not set with a device group, or may be not configured with a device group, or may have authentication processing specified to not use the group identity of a device group. In this example, the authentication request of the target second device may carry a first security parameter corresponding to the target second device and an identity of the target second device.

In an example, each device (such as each zero-power device) in a network or system may be set with a device group, or may be configured with a device group, or may have authentication processing specified to use the group identity of a device group. In this example, the authentication request may further carry a group identity, and the group identity may be represented as a Group ID (GID). The group identity may be set in the target second device in advance, and the setting method thereof is not limited in this embodiment. In this case, the authentication request of the target second device may include a first security parameter corresponding to the target second device, an identity of the target second device, and a group identity.

Note that in the above-described embodiment, the authentication request transmitted by the target second device is described only by taking any one of the plurality of second devices as the target second device as an example. The authentication request transmitted by each second device and the authentication request transmitted by the target second device actually have the same content type, and therefore, details will not be described one by one.

In an embodiment, the authentication request of each second device may carry a first security parameter corresponding to the second device and an identity of the second device, and a group identity is not carried in the authentication request of each second device.

In such an embodiment, the operation of the first device receiving authentication requests from a plurality of second devices may include that the first device receives an authentication request from each of the plurality of second devices within a first duration. That is, when the current time is the aggregation start time, the first device may start a timer and start receiving an authentication request from any one of the devices. When the duration of the timer reaches a first duration, devices corresponding to all authentication requests received within the first duration may be regarded as second devices. In this case, the first device may obtain a first security parameter corresponding to each second device and the identity of each second device through the authentication request of each second device.

The aggregation start time may be determined according to the actual situation, for example, the aggregation start time may be a time point at which an authentication request sent by any device is received the first time. For another example, the aggregation start time may be indicated by the authentication functional entity. The present embodiment does not exhaustively list it and limit it. The first duration may be preconfigured, for example, the first duration may be 1 time unit, or 10 time units, or longer or shorter, and the time unit may be minutes, or seconds, or slots, or symbols, or the like. In this embodiment, the first duration is not limited or exhaustively listed.

In an embodiment, the authentication request of each second device may carry an identity of the second device, and a group identity may be carried in the authentication request of each second device.

In such an embodiment, the operation of the first device receiving authentication requests from a plurality of second devices may include that: the first device receives an authentication request from each of the plurality of devices within a first duration, aggregates the plurality of devices based on a group identity carried by the authentication request of each of the plurality of devices, obtains a plurality of devices under each device group among one or more device groups, uses a k-th device group among the one or more device groups as a device group for this authentication, and uses a plurality of devices in the k-th device group as the plurality of second devices. Since the description of the first duration in the present embodiment is the same as that in the foregoing embodiment, repeated description will not be given here. That is, regardless of how many authentication requests reported by devices are received by the first device, the first device may perform subsequent authentication processing by using a plurality of devices in the same device group as a plurality of second devices. In this case, the first device may obtain the first security parameter corresponding to each second device, the identity of each second device, and the group identity of the same device group to which each second device belongs through the authentication request of each second device.

The operation of the first device aggregating the plurality of devices based on the group identity carried by the authentication request of each of the plurality of devices and obtaining a plurality of devices under each device group among one or more device groups may further include that: the first device extracts the identity of the j-th device and the k-th group identity from the authentication request of the j-th device, determines the group information of the k-th device group based on the k-th group identity, determines whether the identity of the j-th device is in the device group list of the k-th device group, and does not perform subsequent processing on the j-th device if the identity of the j-th device is not in the device group list of the k-th device group, otherwise, if it is in the device group list of the group information of the k-th device group, determines that the j-th device is a device in the k-th device group. By analogy, after performing the same processing for each of the plurality of devices as that for the j-th device, a plurality of devices under each of the one or more device groups may be obtained, wherein j and k are both positive integers, the j-th device is any one of a plurality of devices from which the first device receives the authentication request, and the k-th device group is any one of the one or more device groups. The group information of the k-th device group may be preset, and the group information may include at least a device group list, and the device group list may include identitys of one or more candidate devices of the k-th device group. The setting method and the generation method of the group information are not limited in present embodiment.

It should be understood that since the same processing as that of the k-th device group can be performed for each device group, the processing of all device groups will not be described in detail. It should also be pointed out that the following description of taking any device group as an example in the present disclosure does not mean that the solution provided in the present disclosure can only be processed for one device group, and the same processing for all device groups is not repeated for the sake of conciseness.

In some possible implementations, after the first device receives authentication requests from a plurality of second devices, the first device may calculate a first signature and send a group request message to the authentication functional entity.

In an embodiment, the first signature may be calculated based on a private key of the first device and a group security parameter, wherein the group security parameter is calculated based on the first security parameter corresponding to the each second device.

The manner in which the first device calculates the group security parameter may include: the first device calculates the first security parameter corresponding to the each second device by a first calculation method to obtain the group security parameter. The first calculation method may be any one of an addition calculation, an XOR calculation, a concatenation calculation, and the like.

Taking the first calculation method as addition calculation as an example, assuming that the number of the plurality of second devices is N (N is an integer greater than or equal to 2), the group security parameter calculated by the first device may be expressed as: R = R₁+R₂ +... + R_{N}, where R₁ to R_{N} are the first security parameters respectively corresponding to the N second devices, and R represents the group security parameter.

The manner in which the first device calculates the first signature may include that the first device calculates the first signature using a signature algorithm based on the private key of the first device and the group security parameter.

The signature algorithm may include at least one of followings: RSA, SM2, a JSON Web Signatures (JWS) algorithm, an elliptic curve-based signature algorithm, etc. The SM2 algorithm is a localized algorithm launched by the State Cryptography Administration of China, which is an elliptic curve-based asymmetric algorithm. The signature algorithm is not exhaustively listed and limited here.

For example, the first device may calculate the first signature using a signature algorithm, and the first signature may be obtained by calculating the group security parameter based on the private key of the first device. For example, the calculation of the first signature by the first device may be denoted as Ey (R), where y is the private key of the first device and E represents the signature algorithm.

As another example, the signature algorithm may include a hash calculation and a cryptographic calculation. Accordingly, the manner in which the first device calculates the first signature may include: the first device performs the hash calculation based on the group security parameter to obtain a first hash value, and encrypts the first hash value based on the private key of the first device to obtain the first signature. Here, the hash calculation may be Secure Hash Algorithm (SHA), and more specifically, the SHA may be SHA-256. It should be understood that this is only an exemplary description, and as long as any hash calculation algorithm is adopted in actual processing, it is within the scope of protection of this embodiment, and all possible hash calculation algorithms are not exhaustively listed and limited here.

It should be noted that the above description is an exemplary description of calculating the first signature, and as long as the group security parameter and the private key of the first device are used to calculate the first signature in actual processing, it is within the protection scope of the present embodiment, and the calculation method of the first signature is not limited or exhaustively listed here.

In an embodiment, the first signature may be calculated based on the private key of the first device, the group security parameter, the identity of the each second device, and the identity of the first device.

The calculation method of the group security parameter has been described in detail in the foregoing embodiment, and will not be repeated here.

The manner in which the first device calculates the first signature may include that the first device employs a signature algorithm, and the first device calculates the first signature based on the group security parameter, the private key of the first device, the identity of the each second device, and the identity of the first device.

For example, the first device may calculate the first signature by using a signature algorithm to calculate the group security parameter, the identity of the each second device, and the identity of the first device based on the private key of the first device. For example, the calculation of the first signature by the first device may be expressed as Ey(R∥UE ID∥Tag ID1∥......∥Tag IDN), wherein y represents the private key of the first device, E represents a signature algorithm, R represents a group security parameter, UE ID represents an identity of a terminal when the first device is the terminal, and Tag ID1 to Tag IDN represent identities of N second devices.

It should be understood that the above is only a possible example of calculating the first signature, and in actual processing, the first signature may be calculated by other manners. For example, an XOR calculation may be performed for each of the identities of the N second devices (such as N Tag IDs) first, and then the first signature may be calculated in combination with the group security parameter (such as R), the identity of the first device (such as UE ID), and the private key of the first device (such as y), for example, it may be expressed as Ey(R∥UE ID∥ (Tag ID1 ⊕ ...... ⊕ Tag IDN)). For another example, an XOR calculation may be performed for the identity of the first device (e.g., UE ID) and each of the identities of the N second devices (e.g., N Tag IDs), and then the first signature is calculated in combination with the group security parameter (e.g., R) and the private key (e.g., y) of the first device, for example, it may be expressed as: Ey(R∥ (UE ID ⊕ Tag ID1 ⊕ ...... ⊕ Tag IDN)), etc.

In another example, the signature algorithm may include a hash calculation and a cryptographic calculation. The manner in which the first device calculates the first signature may include: the first device performs the hash calculation based on the group security parameter, the identity of each second device, and the identity of the first device to obtain a second hash value, and encrypts the second hash value based on the private key of the first device to obtain the first signature.

It should be noted that the above description is an exemplary description of calculating the first signature, and in actual processing, as long as the identity of each second device among the plurality of second devices, the identity of the first device, the group security parameter, and the private key of the first device are used to calculate the first signature, it is within the scope of protection of the present embodiment, and how the above-described contents are used in the calculation of the first signature is not limited or exhaustively described here.

In an embodiment, after the first device completes calculating the first signature, a group request message carrying the first signature may be sent to the authentication functional entity.

Optionally, the group request message may carry the group security parameter in addition to the first signature.

Optionally, the authentication request of each second device may carry an identity of each second device, and a first security parameter corresponding to each second device. In this case, the group request message may carry the identity of the first device and the identity of each second device in addition to the first signature and the group security parameter. Further, the group request message may further carry the first security parameter corresponding to each second device.

Optionally, the authentication request of each second device may carry an identity of each second device, a first security parameter corresponding to each second device, and a group identity. In this case, in addition to the first signature, the group security parameter, the identity of the first device, and the identity of each second device, the group request message may also carry at least one of the followings: the group identity, and the first security parameter corresponding to each second device.

Optionally, since the authentication functional entity needs to use a public key of the first device when performing the authentication of the first signature, whether the public key of the first device is carried in the group request message may be determined based on whether the authentication functional entity has stored the public key of the first device in advance.

In a case that the authentication functional entity has stored the public key of the first device in advance, the group request message may carry the identity of the first device and the identity of the each second device in addition to the first signature and the group security parameter; further, the group request message may further carry at least one of: the group identity, and the first security parameter corresponding to each second device.

In a case that the authentication functional entity does not store the public key of the first device in advance, the group request message may carry the identity of the first device and the identity of the each second device in addition to the first signature and the group security parameter; further, the group request message may further carry at least one of: the group identity, the first security parameter corresponding to each second device, and the public key of the first device.

In some possible implementations, after receiving a group request message from a first device, the authentication functional entity may authenticate the plurality of second devices based on the first signature.

In an embodiment, the first signature may be calculated based on a private key of the first device and a group security parameter. In this embodiment, the process of authenticating the plurality of second devices by the authentication functional entity based on the first signature may include: authenticating the plurality of second devices based on the public key of the first device, the group security parameter and the first signature.

The manner in which the authentication functional entity obtains the public key of the first device has been described in detail in the foregoing embodiment, and the description will not be repeated here.

For example, the operation of the authentication functional entity authenticating the plurality of second devices based on the public key of the first device, the group security parameter and the first signature may include: using a signature verification algorithm to decrypt the first signature based on the public key of the first device to obtain a security parameter to be verified, and authenticate the plurality of second devices based on the security parameter to be verified and the group security parameter. The action of authenticating the plurality of second devices based on the security parameter to be verified and the group security parameter may include one of: determining that the authentication of the plurality of second devices is successful when the security parameter to be verified and the group security parameter are the same; and, determining that authentication of the plurality of second devices is failed when the security parameters to be verified and the group security parameter are different. For example, verification of the first signature by the authentication functional entity may be expressed as R = Dx (R), where R represents the group security parameter, D represents the signature verification algorithm, and x represents the public key of the first device.

For another example, the operation of the authentication functional entity authenticating the plurality of second devices based on the public key of the first device, the group security parameter and the first signature may include: the authentication functional entity performs a hash calculation using a signature verification algorithm based on the group security parameter to obtain a first verification hash value, and decrypts the first signature based on the public key of the first device to obtain a first decryption value; and authenticating the plurality of second devices based on the first decryption value and the first verification hash value. The action of authenticating the plurality of second devices based on the first decryption value and the first verification hash value may include at least one of: determining that authentication of the plurality of second devices is successful in a case where the first decryption value and the first verification hash value are the same; and, determining that authentication of the plurality of second devices is failed in a case where the first decryption value and the first verification hash value are different.

In the present embodiments, since the first signature is calculated based on the group security parameter which is calculated based on the first security parameter corresponding to the each second device, the authentication functional entity may authenticate at least a plurality of second devices by verifying the first signature. It should also be pointed out that since the first signature is also calculated based on the private key of the first device, the authentication functional entity can not only authenticate a plurality of second devices, but also authenticate the first device by verifying the first signature, that is, the authentication functional entity may authenticate the plurality of second devices and the first device based on the public key of the first device, the group security parameter and the first signature. Further, the determination that the authentication of the plurality of second devices is successful may refer to the determination that the authentication of the first device and the plurality of second devices is successful; and the determination that the authentication of the plurality of second devices is failed may refer to the determination that the authentication of the first device and the plurality of second devices fails.

In an embodiment, the first signature may be calculated based on the private key of the first device, the group security parameter, the identity of each second device, and the identity of the first device. In this embodiment, the process of authenticating the plurality of second devices by the authentication functional entity based on the first signature may include: authenticating the plurality of second devices based on the public key of the first device, the group security parameter, the identity of each second device, the identity of the first device, and the first signature.

For example, the operation of the authentication functional entity authenticating the plurality of second devices based on the public key of the first device, the group security parameter, the identity of each second device, the identity of the first device, and the first signature may include: decrypting the first signature using a signature verification algorithm based on the public key of the first device to obtain a first content to be verified, and authenticating the plurality of second devices based on the first content to be verified, the group security parameter, the identity of each second device, and the identity of the first device.

The first content to be verified may include: a group security parameter to be verified, a to-be-verified identity of the first device, and a to-be-verified identity of each second device. The action of authenticating the plurality of second devices based on the first content to be verified, the group security parameter, the identity of each second device, and the identity of the first device may include one of the following: determining that the authentication of the plurality of second devices is successful when the group security parameter to be verified is the same as the group security parameter, the to-be-verified identity of the first device is the same as the identity of the first device, and the to-be-verified identity of each second device is respectively the same as the identity of the corresponding second device; and, determining that the authentication of the plurality of second devices is failed when the group security parameter to be verified is different from the group security parameter, and/or the to-be-verified identity of the first device is different from the identity of the first device, and/or the to-be-verified identity of any one of the second devices is different from the identity of the corresponding second device. For example, the verification of the first signature by the authentication functional entity may be epressed as R∥UE ID∥Tag ID1∥......∥Tag IDN =Dx(R∥UE ID∥Tag ID1∥......∥Tag IDN), and the meaning of each content is the same as that of the above-described embodiment, and the description is not repeated.

For another example, the operation of the authentication functional entity authenticating the plurality of second devices based on the public key of the first device, the group security parameter, the identity of each second device, the identity of the first device and the first signature may include: the authentication functional entity performs a hash calculation on the group security parameter, the identity of each second device and the identity of the first device using a signature verification algorithm to obtain a second verification hash value, and decrypts the first signature based on the public key of the first device to obtain a first decryption value; and authenticating the plurality of second devices based on the first decryption value and the second verification hash value.

The action of authenticating the plurality of second devices based on the first decryption value and the second verification hash value may include at least one of: determining that authentication of the plurality of second devices is successful when the first decryption value and the second verification hash value are the same; and determining that authentication of the plurality of second devices is failed when the first decryption value and the second verification hash value are different.

In this embodiment, since the first signature is calculated based on the group security parameter which is calculated based on the identity of each second device, the identity of the first device, and the first security parameter corresponding to the each second device, the authentication functional entity may authenticate at least a plurality of second devices and simultaneously authenticate the first device by verifying the first signature. That is, in this embodiment, the authentication functional entity may authenticate the first device and the plurality of second devices based on the public key of the first device, the group security parameter, the identity of each second device, the identity of the first device, and the first signature. Further, the determination that the authentication of the plurality of second devices is successful may refer to the determination that the authentication of the first device and the plurality of second devices is successful; and the determination that the authentication of the plurality of second devices is failed may refer to the determination that the authentication of the first device and the plurality of second devices fails.

It should be noted that, unless otherwise specified, the following description of successful authentication of a plurality of second devices may alternatively be expressed as successful authentication of the first device and a plurality of second devices, and similarly, the description of failure of authentication of a plurality of second devices may alternatively be expressed as failure of authentication of the first device and a plurality of second devices. The description will not be repeated below for the sake of brevity.

In some possible implementations, after the authentication functional entity obtains the authentication result for the plurality of second devices, the authentication functional entity may further send a group response message to the first device. Here, the authentication result for the plurality of second devices may include successful authentication of the plurality of second devices or failed authentication of the plurality of second devices.

In an embodiment, when the authentication result for the plurality of second devices is authentication failure, the processing of the authentication functional entity may include: sending a group response message to the first device, the group response message carrying an indication that the authentication result for the plurality of second devices is authentication failure. Accordingly, the processing of the first device may include: receiving the group response message from the authentication functional entity. Further, the processing of the first device may further include: ending the processing when the group response message indicates that the authentication result for the plurality of second devices is authentication failure.

In an embodiment, when the authentication result for the plurality of second devices is authentication success, the processing of the authentication functional entity may include: sending a group response message to the first device, wherein the group response message carries a second signature for authenticating the authentication functional entity. Accordingly, the processing of the first device may include: receiving the group response message from the authentication functional entity, wherein the group response message carries a second signature for authenticating the authentication functional entity.

Optionally, the authentication functional entity may implicitly indicate to the first device that the authentication result for the plurality of second devices is authentication success by carrying the second signature in the group response message. That is, when the first device receives the group response message and the group response message carries the second signature, the first device may determine that the authentication result of the authentication functional entity for the plurality of second devices is authentication success.

Optionally, the authentication functional entity may explicitly indicate to the first device that the authentication result for the plurality of second devices is authentication success by carrying an indication that the authentication result for the plurality of second devices is authentication success in the group response message.

In an embodiment, the second signature may be calculated based on a private key of the authentication functional entity and an identity of the authentication functional entity.

Optionally, the process of calculating the second signature by the authentication functional entity may include: the authentication functional entity calculates the second signature using a signature algorithm based on the private key of the authentication functional entity and the identity of the authentication functional entity. The description of the signature algorithm is similar to that in the foregoing embodiment, and the description will not be repeated. For example, calculating the second signature may be denoted as E_{Kpri} (ID_{NF}), where E denotes the signature algorithm, Kₚᵣᵢ denotes the private key of the authentication functional entity, and ID_{NF} denotes the identity of the authentication functional entity.

Optionally, the process of calculating the second signature by the authentication functional entity may include: the authentication functional entity performs a hash calculation on the identity of the authentication functional entity using a signature algorithm to obtain a third hash value, and encrypts the third hash value based on the private key of the authentication functional entity to obtain a second signature.

In this embodiment, in addition to the second signature, the group response message may also carry the identity of the authentication functional entity.

Further, the group response message may carry a second security parameter in addition to the second signature and the identity of authentication functional entity. The second security parameter may be calculated based on a second random number generated by the authentication functional entity.

Specifically, the action of the authentication functional entity calculating the second security parameter may include: the authentication functional entity uses a security algorithm to calculate the second security parameter based on the second random number. However, the manner of generating the second random number is not limited in the present embodiment.

Alternatively, the security algorithm may be a DH algorithm. The above-described DH algorithm may at least include an exponentiation calculation, a modulus function, and the like. Accordingly, the action of the authentication functional entity calculating the second security parameter may include: the authentication functional entity adopts a DH algorithm to perform the exponentiation calculation to obtain a second value based on the second random number and a primitive root, and calculate the second security parameter based on the modulus function to obtain the second value and a large prime number. For example, assuming that the large prime number is denoted as p, the primitive root is denoted as g, the second random number is denoted as r_{NF}, and the modulus function is denoted as mod (); the second security parameter may be calculated using the following formula: R_{NF} = g^{rNF} mod (p).

Alternatively, the security algorithm may be an ECDH algorithm. The above-described ECDH algorithm may include at least a point multiplication operation and the like. Accordingly, the action of the authentication functional entity calculating the second security parameter may include: the authentication functional entity performs a point multiplication operation on the second random number and a generator using the ECDH algorithm to obtain the second security parameter. For example, assuming that the generator is denoted as P, the second random number is denoted as r_{NF}, and the dot-multiplication calculation is denoted as "*"; the second security parameter may be calculated using the following formula: R_{NF} = r_{NF} * P.

In an embodiment, the second signature may be calculated based on the private key of the authentication functional entity, the identity of the authentication functional entity, and the second security parameter.

Optionally, the process of calculating the second signature by the authentication functional entity may include: the authentication functional entity employs a signature algorithm to calculate the second signature based on the private key of the authentication functional entity, the identity of the authentication functional entity, and the second security parameter. The description of the signature algorithm is similar to that in the foregoing embodiment, and the description will not be repeated. For example, calculating the second signature may be denoted as E_{Kpri} (ID_{NF}, R_{NF}), where E denotes the signature algorithm, Kₚᵣᵢ denotes the private key of the authentication functional entity, ID_{NF} denotes the identity of the authentication functional entity, and R_{NF} denotes the second security parameter.

Optionally, the process of calculating the second signature by the authentication functional entity may include: the authentication functional entity performs a hash calculation on the identity of the authentication functional entity and the second security parameter using a signature algorithm to obtain a third hash value, and encrypts the third hash value based on the private key of the authentication functional entity to obtain the second signature.

In this embodiment, in addition to the second signature, the group response message may further carry the identity of the authentication functional entity and the second security parameter.

In some possible implementations, where the first device receives a group response message from the authentication entity, and the group response message carries the second signature for authenticating the authentication functional entity, the first device may authenticate the authentication functional entity based on the second signature.

In an embodiment, the second signature may be calculated based on the private key of the authentication functional entity and the identity of the authentication functional entity, and the group response message further carries at least the identity of the authentication functional entity. In this case, the processing of the first device may include: authenticating the authentication functional entity based on the public key of the authentication functional entity, the identity of the authentication functional entity and the second signature.

The public key of the authentication functional entity may be pre-configured, specifically, the public key of the authentication functional entity is pre-configured at the first device.

For example, the action of authenticating the authentication functional entity based on the public key of the authentication functional entity, the identity of the authentication functional entity and the second signature may include: the first device decrypts the second signature based on the public key of the authentication functional entity using a signature verification algorithm to obtain a to-be-verified identity of the authentication functional entity, and authenticates the authentication functional entity based on the to-be-verified identity of the authentication functional entity and the identity of the authentication functional entity. The action of authenticating the authentication functional entity based on the to-be-verified identity of the authentication functional entity and the identity of the authentication functional entity may include one of: determining that the authentication of the authentication functional entity is successful when the to-be-verified identity of the authentication functional entity and the identity of the authentication functional entity are the same; and, determining that authentication of the authentication functional entity is failed when the to-be-verified identity of the authentication functional entity and the identity of the authentication functional entity are different.

For another example, the action of authenticating the authentication functional entity based on the public key of the authentication functional entity, the identity of the authentication functional entity and the second signature may include: the first device performs a hash calculation based on the identity of the authentication functional entity using a signature verification algorithm to obtain a third verification hash value, and decrypts the second signature based on the public key of the authentication functional entity to obtain a second decryption value; and authenticating the authentication functional entity based on the second decryption value and the third verification hash value. the action of authenticating the authentication functional entity based on the second decryption value and the third verification hash value may include at least one of: determining that authentication of the authentication functional entity is successful when the second decryption value and the third verification hash value are the same; and, determining that authentication of the authentication functional entity fails when the second decryption value and the third verification hash value are different.

In this embodiment, the first device authenticates the second signature generated from the identity of the authentication functional entity, so that the accuracy and authenticity of the identity of the authentication functional entity can be ensured, and the identity authentication of the authentication functional entity can be realized.

In an embodiment, the second signature may be calculated based on the private key of the authentication functional entity, the identity of the authentication functional entity and the second security parameter, and the group response message further carries at least the identity of the authentication functional entity and the second security parameter. In this case, the action of authenticating the authentication functional entity based on the public key of the authentication functional entity, the identity of the authentication functional entity and the second signature may include: authenticating the authentication functional entity based on the public key of the authentication functional entity, the identity of the authentication functional entity, the second signature, and the second security parameter.

For example, the action of authenticating the authentication functional entity based on the public key of the authentication functional entity, the identity of the authentication functional entity, the second signature and the second security parameter may include that: the first device decrypts the second signature based on the public key of the authentication functional entity using a signature verification algorithm to obtain a second content to be verified, and authenticates the authentication functional entity based on the second content to be verified, the identity of the authentication functional entity, and the second security parameter.

The second content to be verified may include: a second security parameter to be verified, and a to-be-verified identity of the authentication functional entity. The action of authenticating the authentication functional entity based on the second content to be verified, the identity of the authentication functional entity, and the second security parameter may include one of: determining that the authentication of the authentication functional entity is successful when the second security parameter to be verified is the same as the second security parameter and the to-be-verified identity of the authentication functional entity is the same as the identity of the authentication functional entity; and, determining that authentication of the authentication functional entity is failed when the second security parameter to be verified is different from the second security parameter and/or the to-be-verified identity of the authentication functional entity is different from the identity of the authentication functional entity.

For another example, the action of authenticating the authentication functional entity based on the public key of the authentication functional entity, the identity of the authentication functional entity, the second signature and the second security parameter may include: the first device performs a hash calculation on the identity of the authentication functional entity and the second security parameter using a signature verification algorithm to obtain a fourth verification hash value, decrypts the second signature based on the public key of the authentication functional entity to obtain a second decryption value, and authenticates the authentication functional entity based on the second decryption value and the fourth verification hash value.

The action of authenticating the authentication functional entity based on the second decryption value and the fourth verification hash value may include at least one of: determining that authentication of the authentication functional entity is successful when the second decryption value and the fourth verification hash value are the same; and, determining that authentication of the authentication functional entity is failed when the second decryption value and the fourth verification hash value are different.

In this embodiment, the first device authenticates the second signature generated from the identity of the authentication functional entity, so that the accuracy and authenticity of the identity of the authentication functional entity can be ensured, and the identity authentication of the authentication functional entity can be realized. Further, the first device can ensure the accuracy and authenticity of the second security parameter due to the authentication of the second security parameter.

When the first device determines that the authentication of the authentication functional entity has failed, the processing of the first device may further include that the first device ends the processing, or the first device transmits an indication that the authentication of the authentication functional entity has failed to the authentication functional entity and/or the each second device.

In the event that the first device determines that the authentication of the authentication functional entity is successful, the processing of the first device may further include: the first device transmits, to the authentication functional entity and/or each second device, an indication that the authentication of the authentication functional entity is successful.

In some possible implementations, the authentication request of the each second device may further carry uplink encrypted information corresponding to each second device. In other words, the authentication request of any one of the second devices carries uplink encrypted information of the corresponding second device.

Taking any second device as the target second device as an example, the authentication request further carries uplink encrypted information, and the uplink encrypted information is obtained by encrypting the first random number based on the public key of the authentication functional entity.

In an embodiment, the processing of the target second device may include: encrypting the first random number based on the public key of the authentication functional entity to obtain uplink encrypted information.

Here, the encryption calculation manner is not limited in the present embodiment. The public key of the authentication functional entity may be preconfigured, that is, the public key of the authentication functional entity may be preconfigured in the target second device. The description of the first random number is the same as that in the above-described embodiment, and the description thereof will not be repeated.

For example, calculating uplink encrypted information by the target second device may be expressed as: E_{Kpub} (r1), where E represents an encryption algorithm, K_{pub} represents the public key of the authentication functional entity, and r1 represents the first random number corresponding to the target second device.

Since the processing of each second device is the same as the processing of the target second device, the processing manner in which each second device generates uplink encrypted information corresponding to the corresponding second device will not be described herein.

After the first device receives the authentication request of each second device, the processing of the first device may further include: decrypting uplink encrypted information corresponding to the each second device based on the public key of the authentication functional entity to obtain a first random number corresponding to the each second device. Here, the decryption algorithm and the encryption algorithm may correspond to each other, which is not limited in the present embodiment.

Still taking any one of the plurality of second devices as the target second device as an example, the process of obtaining the first random number corresponding to the target second device by the first device through decryption may include: decrypting the uplink encrypted information corresponding to the target second device based on the public key of the authentication functional entity, and obtaining the first random number corresponding to the target second device. Since the processing of each second device is the same as the processing of the target second device, the processing manner in which the first device obtains the first random number corresponding to the each second device through decryption will not be described herein.

In an embodiment, the uplink encrypted information may be obtained by encrypting the first random number and uplink plaintext data based on the public key of the authentication functional entity. That is, the processing of the target second device may include: encrypting the first random number and the uplink plaintext data based on the public key of the authentication functional entity to obtain uplink encrypted information.

Here, the uplink plaintext data may be service data of the target second device, and the manner of collecting or acquiring the uplink plaintext data is not limited in the present embodiment.

For example, calculating the uplink encrypted information by the target second device may be expressed as: E_{Kpub} (r1∥m1), where E represents an encryption algorithm, K_{pub} represents the public key of the authentication functional entity, r1 represents the first random number corresponding to the target second device, and m1 represents the uplink plaintext data of the target second device.

Since the processing of each second device is the same as the processing of the target second device, the processing manner in which each second device generates uplink encrypted information corresponding to the corresponding second device will not be described herein.

After the first device receives the authentication request of each second device, the processing of the first device may further include: decrypting the uplink encrypted information corresponding to the each second device based on the public key of the authentication functional entity to obtain the first random number and the uplink plaintext data corresponding to the each second device.

Still taking any one of the plurality of second devices as the target second device as an example, the process of obtaining the first random number corresponding to the target second device by the first device through decryption may include: decrypting the uplink encrypted information corresponding to the target second device based on the public key of the authentication functional entity to obtain the first random number and the uplink plaintext data corresponding to the target second device.

Here, after the first device obtains the first random number and the uplink plaintext data corresponding to the target second device, the first device may store the first random number corresponding to the target second device only and not store the uplink plaintext data of the target second device. Alternatively, the first device may store only the first random number corresponding to the target second device and store the uplink plaintext data of the target second device.

Since the processing of each second device is the same as the processing of the target second device, the processing manner in which the first device performs decryption to obtain the first random number and the uplink plaintext data corresponding to the each second device will not be described herein.

It should also be noted that the first device may further perform processing such as calculating the first signature as provided in the foregoing embodiment on the basis of obtaining the first random number corresponding to each second device, and the description thereof will not be repeated here.

In an embodiment, the processing of the first device may further include: transmitting uplink encrypted information corresponding to each second device to the authentication functional entity. In this embodiment, the group request message may further carry the uplink encrypted information corresponding to the each second device. Accordingly, the processing of the authentication functional entity after receiving the group request message may further include: the authentication functional entity decrypts the uplink encrypted information corresponding to the each second device to obtain the uplink plaintext data corresponding to the each second device.

Still taking the target second device as an example, the action of the authentication functional entity decrypting the uplink encrypted information corresponding to the each second device to obtain the uplink plaintext data corresponding to the each second device may include: the authentication functional entity decrypts the uplink encrypted information corresponding to the target second device based on the public key of the authentication functional entity to obtain the uplink plaintext data corresponding to the target second device. It should be understood that the first random number corresponding to the target second device may also be obtained after the uplink encrypted information corresponding to the target second device is decrypted, and in this case, the authentication functional entity may ignore or not store the first random number of the target second device, or may store but not use the first random number of the target second device, which is not limited in this embodiment. Since the processing of the authentication functional entity for each second device is the same as that for the target second device, the processing manner of decrypting the uplink plaintext data corresponding to the each second device by the authentication functional entity will not be described herein.

In an embodiment, the first device may transmit the uplink plaintext data corresponding to the each second device only to the authentication functional entity, for example, the group request message may further carry the uplink plaintext data corresponding to the each second device. In this embodiment, the processing of the authentication functional entity after receiving the group request message may further include: the authentication functional entity receives and stores the uplink plaintext data corresponding to the each second device.

It should be noted that the authentication functional entity may also perform processing such as calculating the second signature as provided in the foregoing embodiment on the basis of obtaining the uplink plaintext data corresponding to the each second device, and the description thereof will not be repeated here.

In some possible implementations, in a case where the first device receives the group response message and successfully authenticates the authentication functional entity, the processing of the first device may further include: calculating a first communication key based on the second security parameter and the first random number corresponding to the each second device, wherein the first communication key is used for communication between the first device and the authentication functional entity. Accordingly, in a case where the authentication functional entity successfully authenticates the plurality of second devices, the method may further include: calculating the first communication key based on the second random number and the group security parameter, wherein the first communication key is used for communication between the first device and the authentication functional entity.

Here, the action of the first device calculating the first communication key based on the second security parameter and the first random number corresponding to the each second device may include: the first device calculates a group random number based on the first random number corresponding to the each second device, and performs a point multiplication operation based on the group random number and the second security parameter to obtain the first communication key.

For example, calculation of the group random number by the first device based on the first random number corresponding to the each second device may mean that the first device performs a summation calculation based on the first random number corresponding to the each second device to obtain the group random number. It should be understood that this is only an exemplary description, and with regard to the specific calculation manner in which the first device calculates the group random number based on the first random number corresponding to the each second device, other manners may be set according to the actual situation, such as at least one of XOR calculation, concatenation calculation, and the like, which is not limited or exhaustively described here.

For example, calculation of the first communication key by the first device may be expressed as: SK = R_{NF * r}, r = r1+r2 +... + rn, where SK represents the first communication key, R_{NF} represents the second security parameter, "*" represents the point multiplication operation, r represents the group random number, and r1-rm represent first random numbers corresponding to the N second devices.

Accordingly, the action of the authentication functional entity calculating the first communication key based on the second random number and the group security parameter may include: performing the point multiplication operation based on the second random number and the group security parameter to obtain the first communication key. For example, calculation of the first communication key by the authentication functional entity may be expressed as SK = r_{NF} * R, where SK represents the first communication key, r_{NF} represents the second random number, and R represents the group security parameter.

In some possible implementations, the group response message may further carry downlink encrypted information corresponding to the each second device. The downlink encrypted information of the each second device is obtained by encrypting downlink plaintext data of the each second device based on a second communication key corresponding to the each second device, and the second communication key corresponding to the each second device is calculated based on the second random number and the first security parameter corresponding to the each second device.

The downlink plaintext data of different second devices among the plurality of second devices may be the same or different, and all of them are within the scope of protection of the present embodiment, and are not limited herein.

The authentication functional entity may start calculating the second communication key corresponding to the each second device after successful authentication of the plurality of second devices, and encrypt the downlink plaintext data of the each second device; alternatively, when the authentication functional entity successfully authenticates the plurality of second devices and completes the calculation of the second signature, the authentication functional entity may start calculating the second communication key corresponding to the each second device and encrypt the downlink plaintext data of the each second device, and as long as the timing of starting calculation of the second communication key corresponding to the each second device and encrypting the downlink plaintext data of the each second device is before sending the group response message, it is within the scope of protection of the present embodiment, and various possible timings thereof are not limited and exhaustively described here.

The action of the authentication functional entity calculating the second communication key corresponding to the each second device may include: performing a point multiplication operation based on the second random number and the first security parameter corresponding to the each second device to obtain the second communication key corresponding to the each second device. Taking the target second device as an example, the authentication functional entity calculates a second communication key corresponding to the target second device, which may be expressed as: sk1 = r_{NF} * R1, wherein sk1 represents the second communication key corresponding to the target second device, r_{NF} represents the second random number, and R1 represents the first security parameter corresponding to the target second device.

The authentication functional entity may calculate the downlink encrypted information of each second device in such a manner that the authentication functional entity encrypts the downlink plaintext data of the each second device based on the second communication key corresponding to the each second device to obtain the downlink encrypted information of the each second device. Taking the target second device as an example, the authentication functional entity calculates downlink encrypted information of the target second device, which may be expressed as: Eₛₖ₁ (M), where E represents a encryption calculation, M represents downlink plaintext data, and sk1 represents the second communication key corresponding to the target second device.

In this embodiment, the processing after the first device successfully authenticates the authentication functional entity based on the second signature after receiving the group response message may further include: sending an authentication response to the each second device, wherein the authentication response corresponding to the each second device carries the second security parameter.

Here, since the second security parameters transmitted by the first device to all the second devices are the same, the authentication response may be a broadcast message. The first device may also send a corresponding authentication response to each second device respectively, and in this case, the authentication response corresponding to the each second device may be a unicast message.

Taking the target second device as an example, the processing of the target second device after sending the authentication request may include: receiving an authentication response from the first device, wherein the authentication response carries a second security parameter; and calculating a second communication key based on the second security parameter and the first random number.

Calculating the second communication key based on the second security parameter and the first random number may include: the target second device performs a point multiplication operation on the second security parameter and the first random number corresponding to the target second device to obtain the second communication key. For example, the process of calculating the second communication key by the target second device may be expressed as sk1 = r1 * R_{NF}, where r1 denotes the first random number corresponding to the target second device, R_{NF} denotes the second security parameter, and sk1 denotes the second communication key corresponding to the target second device.

Since each second device performs the same processing as the target second device to obtain the second communication key corresponding to the each second device, the description thereof is not repeated here.

Further, since the group response message in the present embodiment further carries downlink encrypted information of each second device, the authentication response corresponding to the each second device further carries downlink encrypted information.

Here, although the second security parameters transmitted by the first device to the second devices are the same, the downlink encrypted information of different second devices may be different, and thus the authentication response corresponding to the each second device may be a unicast message.

Taking the target second device as an example, the authentication response further carries downlink encrypted information, and the processing of the target second device may further include: decrypting the downlink encrypted information based on the second communication key to obtain downlink plaintext information. For example, the processing of calculating downlink plaintext data by the target second device may be expressed as: M = Dₛₖ₁ (Eₛₖ₁ (M)), where D represents decryption calculation, E represents encryption calculation, and the rest of the formula contents are the same as those in the foregoing embodiment, and will not be described in detail. Since each second device performs the same processing as the target second device to obtain the downlink plaintext data corresponding to the each second device, it is not repeated here.

In some embodiments, the group response message may further carry a second communication key corresponding to the each second device. In this embodiment, the authentication functional entity may further transmit the second communication key corresponding to the each second device to the first device, so that the first device and each second device can also communicate. It should be noted that, in this embodiment, after receiving the second communication key corresponding to the each second device, the first device locally stores the second communication key corresponding to each second device, but does not send to any second device the second communication key corresponding to that device.

In some possible implementations, reporting authentication requests by the foregoing plurality of second devices may be triggered by the first device.

Before receiving the authentication request from the each second device, the action of the first device may further include: sending a trigger message to the each second device, wherein the trigger message is used to trigger the each second device to send the authentication request. Accordingly, taking the target second device as an example, in addition to the target second device sending an authentication request to the first device, the method further includes: receiving a trigger message from the first device, wherein the trigger message is used to trigger the target second device to send the authentication request.

The above-described trigger message may carry a group identity.

Alternatively, the trigger message may be an energizing signal or an energizing message that functions to provide environmental energizing for each of the plurality of second devices. Optionally, the trigger message may be a paging message, and the trigger message may function to page a plurality of second devices. In this case, the authentication request transmitted by each of the plurality of second devices may specifically be a paging response. Optionally, the trigger message may be a discovery message, and the trigger message is used to discover a plurality of second devices. In this case, the authentication request transmitted by each of the plurality of second devices may be a discovery response. Optionally, the trigger message may be a group authentication trigger message, and the trigger message is used to trigger a group to perform authentication. In this case, the authentication request transmitted by the each second device may be an authentication response.

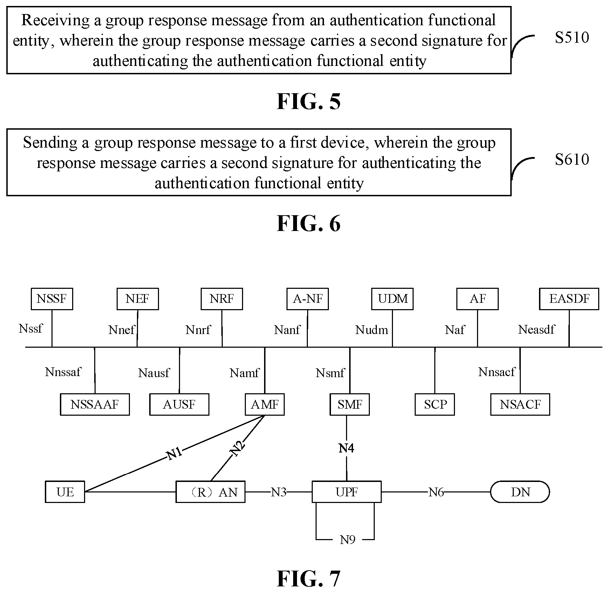

FIG. 5 is a schematic flowchart of an authentication method implemented by a first device according to an embodiment of the present disclosure. The method includes at least part of contents below.

S510 includes: receiving a group response message from an authentication functional entity, wherein the group response message carries a second signature for authenticating the authentication functional entity.

FIG. 6 is a schematic flowchart of an authentication method implemented by an authentication functional entity according to an embodiment of the present disclosure. The method includes at least part of contents below.

S610 includes: sending a group response message to a first device, wherein the group response message carries a second signature for authenticating the authentication functional entity.

The above-described first device and authentication functional entity are the same as those in the above-described embodiments, and the description thereof will not be repeated.

In a possible implementation, before the first device receives the group response message from the authentication functional entity, the following processing may be further performed: receiving authentication requests from a plurality of second devices, wherein the authentication request of each second device among the plurality of second devices carries an identity of the each second device; and sending a group request message to the authentication functional entity, wherein the group request message carries identities of the plurality of second devices and an identity of the first device.

Accordingly, before the authentication functional entity sends the group response message to the first device, the method may further include: receiving a group request message from the first device, wherein the group request message carries the identitys of the plurality of second devices and the identity of the first device.

The description of the second device is the same as that in the foregoing embodiments, and the description will not be repeated.

Optionally, before the first device receives the authentication requests from the plurality of second devices, the method may further include: sending a trigger message to the each second device, wherein the trigger message is used to trigger the each second device to send the authentication request. The processing and description related to the trigger message are the same as those in the foregoing embodiments, and the description thereof will not be repeated.

In some possible implementations, the group response message may also carry an identity of the authentication functional entity. The second signature is calculated based on a private key of the authentication functional entity and an identity of the authentication functional entity. The processing after the first device receives the group response message may include: authenticating the authentication functional entity based on the public key of the authentication functional entity, the identity of the authentication functional entity and the second signature.

Further, the group response message may further carry a second security parameter, the second security parameter being calculated based on a second random number generated by the authentication functional entity. The second signature is calculated based on the private key of the authentication functional entity, the identity of the authentication functional entity, and the second security parameter. The action of the first device authenticating the authentication functional entity based on the public key of the authentication functional entity, the identity of the authentication functional entity and the second signature may include: authenticating the authentication functional entity based on the public key of the authentication functional entity, the identity of the authentication functional entity, the second signature, and the second security parameter.

In this embodiment, processing such as calculation of the second signature by the authentication functional entity and verification of the second signature by the first device to authenticate the authentication functional entity are the same as processing related to the second signature in the foregoing embodiments, and thus repeated description thereof will not be made.

Each of the above embodiments is different from the foregoing embodiments in that since the authentication functional entity does not need to perform authentication for each second device and the first device, in this embodiment, each second device may no longer generate the first random number, and further each second device may no longer calculate the first security parameter, that is, the authentication functional entity may only need to know the identity of each second device and the identity of the first device, and may further determine the identity of each second device and the identity of the first device as well as the relationship thereof, and then perform the process of calculating the second signature and sending the second signature to the first device.

Note that, in the solution provided by the present embodiment, the first device, the each second device, and the authentication functional entity may execute at least some of the processes provided in each of the embodiments corresponding to FIGS. 2 to 4 in addition to the processing related to the second signature, and the description thereof is not repeated for the sake of simplicity.

The applicable architecture of the authentication method provided by each of the above-described embodiments will be described with reference to FIG. 7, in which network elements that may be included in the system are schematically illustrated, for example, network elements such as UE, (R) AN, UPF, DN, NSSAAF, NSSAF, SCP, EASDF, NSACF, etc. may be included. The 3GPP system is required to support a new function, that is, an A-IoT group authentication function (A-NF), which may be provided or configured in a newly added dedicated network element of core network, or may be provided or configured in a core network element having at least one of AMF, SMF, AUSF, UDM, HSS, ARPF, BSF, SEAF, etc., or may be completed in cooperation with AUSF and UDM. It should be understood that FIG. 7 also illustrates the external service interface provided by each network element, for example, the external service interface provided by the AMF may be Namf, the external service interface provided by the SMF may be Nsmf and the like, and the external service interface provided by the newly added network element A-NF may be Nanf, which is merely an exemplary description here, and the external service interfaces provided by other network elements are clearly illustrated in FIG. 7, so no details will be described here.

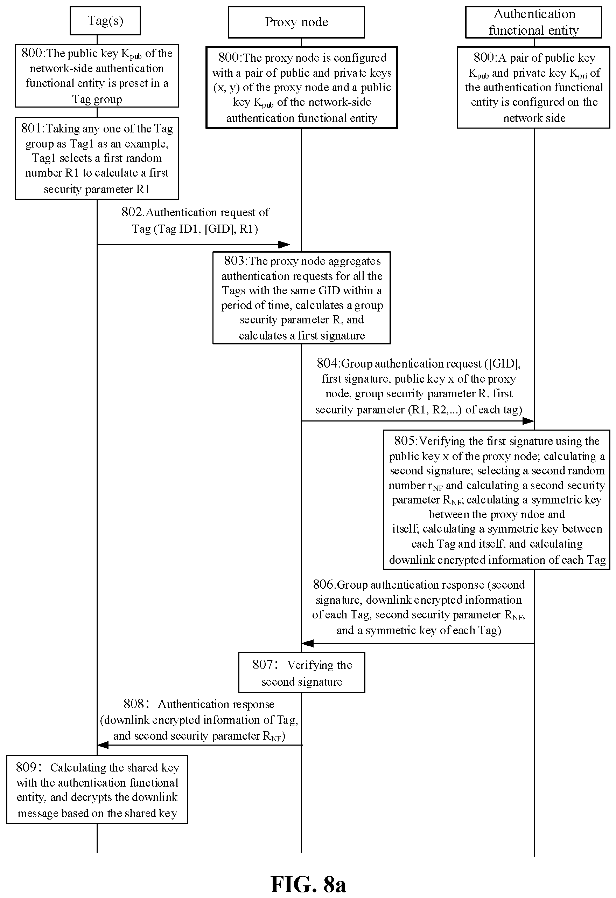

Referring to FIG. 8a, as an example, the plurality of second devices are Tag (s) and the first device is a proxy node, and the authentication methods described above are illustratively described.

Step 800 includes: The public key K_{pub} of the network-side authentication functional entity is preconfigured in a Tag group. The proxy node is configured with a pair of public and private keys (x, y) of the proxy node and a public key K_{pub} of the network-side authentication functional entity. A pair of public key K_{pub} and private key Kₚᵣᵢ of the authentication functional entity is configured on the network side.

Step 801 includes: Taking any one of the Tag group as Tag1 as an example, Tag1 selects a first random number R1 to calculate a first security parameter R1.

Here, R1 may be calculated in many manners, for example, one manner is to use a DH key exchange algorithm, in which R1 = g^{r1}mod (p), where p is a large prime number and g is a primitive root of p; another calculation manner is to use an ECDH algorithm in which, R1=r1*P, * is a point multiplication operation, P is a generator of the additive cyclic group GP, and P is a public parameter.

Step 802 includes: A plurality of tags in the Tag group send authentication requests (Tag Auth-Req) to the proxy node, wherein, taking Tag1 as an example, the authentication request of Tag1 includes Tag ID1, a GID (optionally), a first security parameter R1, and may further include uplink encrypted information E_{Kpub} (r1∥m1) (optionally).

Step 803 includes: The proxy node aggregates authentication requests for all the Tags with the same GID within a period of time, calculates a group security parameter R, and calculates a first signature. The detailed description of calculating the group security parameter R and calculating the first signature in this step is the same as that in the foregoing embodiments, and will not be repeatedly described.

Step 804 includes: The proxy node sends a group authentication request (i.e. the group request message in the aforementioned embodiments) to the authentication functional entity, and the group authentication request may include the GID (optionally), the first signature, the public key x of the proxy node, the group security parameter R, the first security parameter (R1, R2,...) of each tag.

Step 805 includes: The authentication functional entity verifies the first signature using the public key x of the proxy node, and authenticates the Tag group by verifying the first signature; the authentication functional entity then calculates a second signature E_{Kpri} (ID_{NF}), selects a second random number r_{NF} and calculates a second security parameter R_{NF} = g^{rNF}mod (p); the authentication functional entity calculates a symmetric key (i.e. the first communication key) SK = r_{NF} * R between the proxy node and itself, calculates a symmetric key (i.e., a second communication key corresponding to each Tag) between each Tag and itself, and calculates downlink encrypted information of each Tag. Taking Tag1 as an example, the symmetric key of Tag1 is sk1=r_{NF}*R1, and the downlink encrypted information of Tag1 is Eₛₖ₁ (M), where M is downlink plaintext information.

Here, the authentication functional entity may simultaneously authenticate the proxy node by verifying the first signature.

Step 806 includes: The authentication functional entity sends to the proxy node a group authentication response (i.e., the group response message in the foregoing embodiments), including the second signature E_{Kpri}(ID_{NF})∥ID_{NF}, the downlink encrypted information of each Tag, the second security parameter RNF, and the symmetric key of each Tag.

Step 807 includes: The proxy node verifies the second signature, and after the verification is successful, executes step 808; if the authentication fails, the processing may be terminated, and the processing of the authentication failure will not be described in detail here.

Step 808 includes: The proxy node broadcasts or unicasts an authentication response (such as a Tag Auth-Res message) to the Tag group, and the authentication response corresponding to each Tag includes the downlink encrypted information of the Tag and the second security parameter R_{NF}.

Step 809 includes: Each tag calculates a shared key (i.e., the second communication key corresponding to each tag) with the authentication functional entity, and decrypts the downlink encrypted information based on the shared key. Taking Tag1 as an example, Tag1 calculates the shared key sk1 = r1 * R_{NF} with the authentication functional entity, and decrypts the downlink message M = Dₛₖ₁ (Eₛₖ₁ (M)), where E represents encryption and D represents decryption.

With respect to the aforementioned example of FIG. 8a, it should be pointed out that in FIG. 8a, parentheses [] represent possible parameters, and dashed lines represent possible devices, messages.

In the example of FIG. 8a, the proxy node may be an access network device, such as at least one of a base station, a gNB, an eNB, an (R)AN node, etc. Taking the access network device as a base station as an example, in a scenario in which a Tag is directly connected to a base station, the base station aggregates authentication requests from the Tags, and the 5GC and the AF may configure group information of the Tags for the base station. In the example of FIG. 8a, the proxy node may be a terminal, such as a UE, and the UE may be connected to the network side (authentication functional entity) through a corresponding access network device (at least one of a base station, a gNB, an eNB, an (R)AN node, etc.), that is, in this case, the UE may also need to exchange information with the authentication functional entity through a corresponding access network device.

The related description of the authentication functional entity illustrated in FIG. 8a is the same as that in the previous embodiments, and the description will not be repeated.

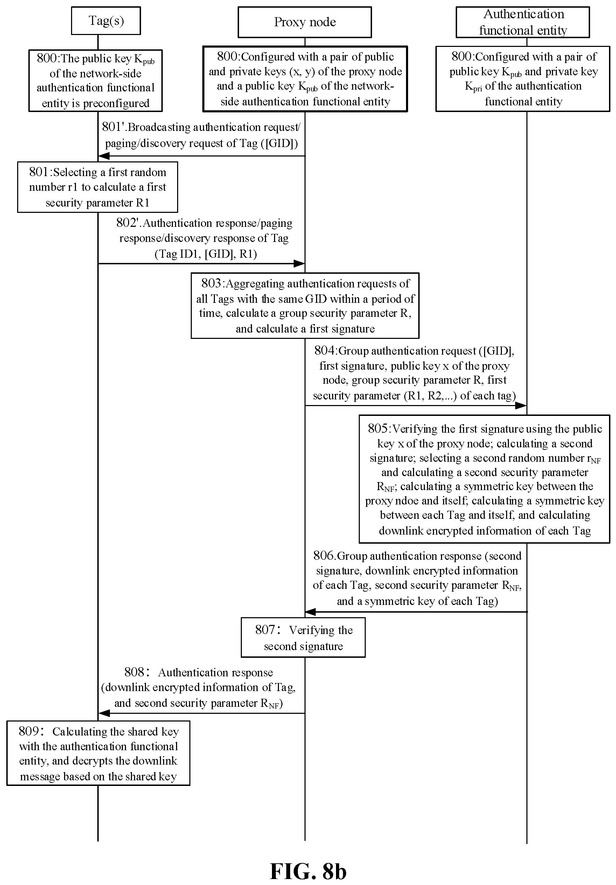

Referring to FIG. 8b, another exemplary description of the foregoing authentication methods is made by taking the plurality of second devices as Tag (s) and the first device as a proxy node as an example:

The step 800 of FIG. 8b is the same as the step 800 of FIG. 8a, and will not be described in detail.

Step 801' includes: The proxy node broadcasts at least one of authentication requests of Tags (group), paging requests of Tags (group) and discovery requests of Tags (group), triggers group authentication of the Tags, and may further carry a GID in at least one of the authentication requests of Tags (group), the paging requests of Tags (group) and the discovery requests of Tags (group).

Step 801 of FIG. 8b is the same as step 801 of FIG. 8a, and will not be repeatedly described.

In step 802', each tag may transmit any one of an authentication response, a paging response, and a discovery response based on a trigger mode. Taking Tag1 as an example, any one of the authentication response, paging response and discovery response of Tag1 carries Tag ID1, a GID (optional), and a first security parameter R1, and may further include uplink encrypted information E_{Kpub}(r1∥m1) (optional).

Steps 803 to 809 in FIG. 8b are the same as steps 803 to 809 in FIG. 8a, and will not be described in detail.

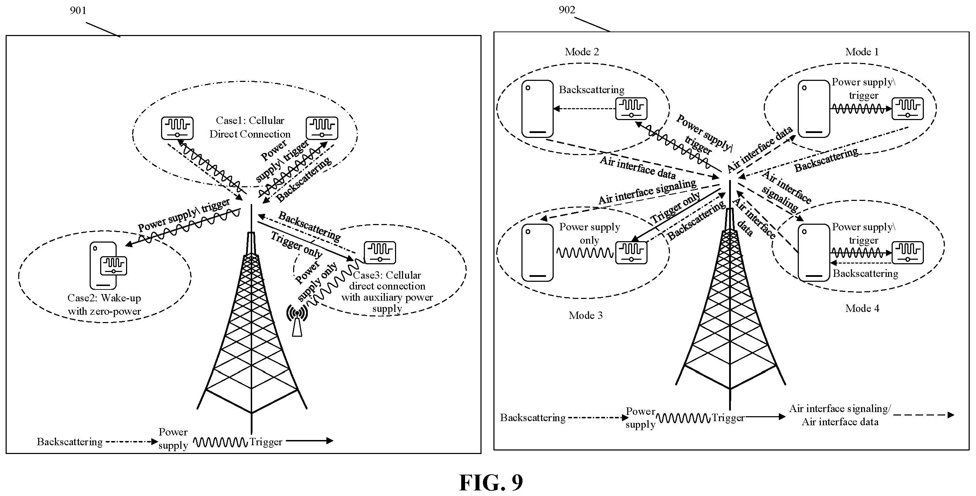

Referring to FIG. 9, taking any one of the second devices as a zero-power device as an example, a possible architecture in which the second device accesses a cellular system in the present embodiment is illustratively described: In part 901 of FIG. 9, for the cellular-based zero-power communication system, the base station provides a wireless power supply signal and a trigger signal to the zero-power device. The wireless power supply signal is used to provide energy to the zero-power device; the trigger signal may carry control information sent to the zero-power device; the zero-power device transmits information to the base station by backscattering. Case 1 is cellular direct connection, where the base station and zero-power device communicate directly, and the base station provides a wireless power supply signal and a trigger signal to the zero-power device. Case 2 is zero-power wake-up, where the zero-power device may be combined with a traditional terminal to undertake and complete some low-power operations to assist in realizing the energy saving of the traditional terminal; the base station first sends a wake-up signal when it is required to communicate with the traditional terminal, and the zero-power device is waken up when detecting this wake-up signal. Case 3 is cellular direct connection with auxiliary power supply, in which the zero-power device can not only obtain wireless power supply from the base station communicating with it, but also obtain power supply from a third-party device. Part 902 in FIG. 9 is for a zero-power communication system based on cellular and sideline communication, wherein mode 1 is zero-power communication triggered by intelligent terminal-assisted power supply, mode 2 is zero-power Sidelink (Sidelink) communication with network power supply/trigger, mode 3 is zero-power communication with intelligent terminal-assisted power supply, and mode 4 is zero-power Sidelink communication controlled by network.

The asymmetric cryptosystem of the aforementioned embodiments is described, which is also referred to as a public key cryptosystem, and is characterized in that two related keys are used to separate encryption and decryption capabilities. One key is public and may be understood to be transmitted over a communication air interface, and is called a public key (such as the public key x of the first device and the public key K_{pub} of the authentication functional entity in the aforementioned embodiments) for encryption; and, the other key is dedicated to users and is therefore confidential, which may be understood as being held only by the users, and is referred to as a private key (such as the private key y of the first device and the private key Kₚᵣᵢ of the authentication functional entity in the aforementioned embodiments) for decryption. Commonly used encryption algorithms include: an RSA algorithm, an elliptic curve algorithm and an SM2 algorithm.

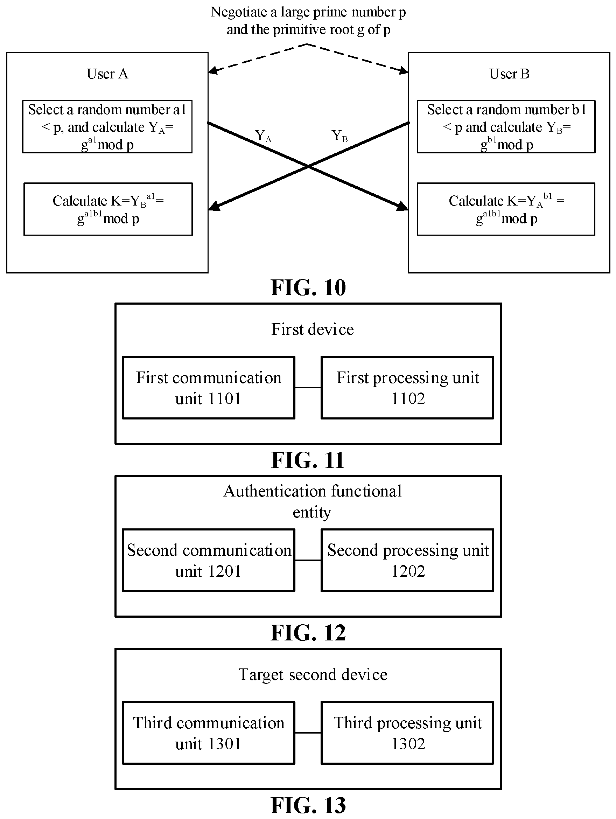

In the above asymmetric cryptosystem, the key generation mode may use a DH key exchange algorithm (herein referred to as DH algorithm for short). The DH algorithm is a typical key generation mode in the asymmetric cryptosystem. The sole purpose of the algorithm is to enable two users (or devices at both ends of sending and receiving messages) to exchange keys securely and obtain a shared session key. The security of the algorithm is based on the difficulty of finding discrete logarithms. The DH algorithm is illustrated in conjunction with FIG. 10: p (large prime number) and g (primitive root) of p are elements known by both user A and user B (that is, devices A and B at both ends of sending and receiving messages, hereinafter referred to as A and B for short). For the random numbers a1 and b1 selected by A and B respectively (a1 < p, and b1 < p), A calculates Y_{A} = g^{a1}mod p based on random number a1, B calculates Y_{B} = g^{b1}mod p based on random number b1, then A transmits Y_{A} to B, B tranmits Y_{B} to A, and finally A calculates K=Y_{B}^{a1}= g^{a1b1}mod p, and B calculates K =Y_{A}^{b1}= g^{a1b1}mod p. That is, the obtained same K is used as the shared key of A and B. In the above processing of A and B, since the random numbers a1 and b1 selected by A and B respectively are confidential, an eavesdropper can only obtain Y_{A} and Y_{B} transmitted by an air interface, and if the eavesdropper wants to calculate K, the eavesdropper is required to calculate either a1 or b1, so the eavesdropper cannot calculate K. Furthermore, there is also a DH key exchange algorithm on an elliptic curve, which is called an ECDH algorithm. The ECDH algorithm is of a variant of the DH algorithm, and will not be repeated here.

Digital signature (that is, the first signature and the second signature in the foregoing embodiments) is developed from public key cryptography. A sender uses its own private key to encrypt the ciphertext of the message M as the digital signature of M, and a receiver uses the public key of the sender to decrypt the message. Since only the sender has the private key, the receiver can believe that the received message is indeed from the legitimate sender. Commonly used signature algorithms include RSA, SM2, JSON Web Signatures (JWS) algorithm, elliptic curve-based signature algorithm, etc., which will not be elaborated on here.

The authentication process of the prior art is characterized by high complexity in key architecture, interaction flow, secure calculation and so on, and the zero-power device (that is, any one of the second devices in the foregoing embodiments) is characterized by low computing and storage capabilities, and can only use environmental power supply, etc., and these characteristics cause the access authentication technology to be unsuitable for the zero-power device. In addition, there may be a large number of zero-power devices in an area. If a large number of zero-power devices access the network in a short time, it will bring a lot of authentication signaling overhead and network computing overhead to the network, which may lead to network congestion and affect the quality of service.

By adopting the method provided by the present embodiment, the first device calculates a first signature based on the first security parameter carried by the authentication request of each second device among the plurality of second devices, and sends a group request message carrying the first signature to the authentication functional entity, so that the authentication functional entity authenticates the plurality of second devices based on the first signature. In this way, it avoids the network congestion that may be caused by the authentication functional entity on the network side authenticating each second device individually when a large number of second devices access the network in a short period of time, reduces the communication signaling overhead between the first device and the authentication functional entity, and improves the efficiency of authentication processing.

FIG. 11 is a schematic diagram of a composition structure of a first device according to an embodiment of the present disclosure, including:
a first communication unit 1101, configured to receive authentication requests from a plurality of second devices, wherein the authentication request of each second device amomg the plurality of second devices carries a first security parameter; and send a group request message to an authentication functional entity, wherein the group request message carries a first signature for authenticating the plurality of second devices, and the first signature is calculated based on the first security parameter corresponding to the each second device.

The first signature is calculated based on a private key of the first device and a group security parameter, wherein the group security parameter is calculated based on the first security parameter corresponding to the each second device.

The group request message further carries the group security parameter.

The first signature is calculated based on the private key of the first device, the group security parameter, an identity of the each second device, and an identity of the first device.

The authentication request for each second device further carries the identity of each second device.

The group request message further carries the identity of the first device, and the identity of the each second device.

The authentication request of the each second device further carries a group identity.

The group request message further carries at least one of: the group identity, the first security parameter corresponding to the each second device, and a public key of the first device.

The first communication unit is configured to receive a group response message from the authentication functional entity, wherein the group response message carries a second signature for authenticating the authentication functional entity.

The group response message further carries an identity of the authentication functional entity.

As shown in FIG. 11, the first device further includes a first processing unit 1102.

The first processing unit is configured to authenticate the authentication functional entity based on the public key of the authentication functional entity, the identity of the authentication functional entity and the second signature.

The group response message further carries a second security parameter.

The first processing unit is configured to authenticate the authentication functional entity based on the public key of the authentication functional entity, the identity of the authentication functional entity, the second signature, and the second security parameter.

The authentication request of the each second device further carries uplink encrypted information corresponding to the each second device.

The first processing unit is configured to decrypt uplink encrypted information corresponding to the each second device based on the public key of the authentication functional entity to obtain a first random number corresponding to the each second device.

The first processing unit is configured to calculate a first communication key based on the second security parameter and the first random number corresponding to the each second device, wherein the first communication key is used for communication between the first device and the authentication functional entity.

The group request message further carries the uplink encrypted information corresponding to the each second device.

The first communication unit is configured to send an authentication response to the each second device, wherein the authentication response corresponding to the each second device carries the second security parameter.

The group response message further carries downlink encrypted information of the each second device; and the authentication response corresponding to the each second device further carries the downlink encrypted information.

The group response message further carries a second communication key corresponding to the each second device.

The public key of the authentication functional entity is preconfigured.

The first communication unit is configured to send a trigger message to the each second device, wherein the trigger message is configured to trigger the each second device to send the authentication request of the each second device.

The first device includes one of: a terminal, and an access network device. The second device includes a zero-power device. The authentication functional entity is deployed in at least one of: an application function (AF), an access and mobility management function (AMF), a session management function (SMF), an authentication service function (AUSF), a unified data management function (UDM), a unified data storage (UDR), a home subscription system (HSS), an authentication credential storage and processing function (ARPF), a guidance service function (BSF), a security anchor point function (SEAF), and a dedicated network element of core network.

FIG. 12 is a schematic diagram of a composition structure of an authentication functional entity according to an embodiment of the present disclosure, including:

The second communication unit 1201 is configured to receive a group request message from a first device, wherein the group request message carries a first signature for authenticating a plurality of second devices, and the first signature is calculated based on a first security parameter corresponding to each second device among the plurality of second devices.

As shown in FIG. 12, the authentication functional entity further includes a second processing unit 1202.

The group request message further carries a group security parameter. The second processing unit is configured to authenticate the plurality of second devices based on a public key of the first device, the group security parameter and the first signature.

The second processing unit is configured to authenticate the plurality of second devices based on the public key of the first device, the group security parameter, an identity of the each second device, an identity of the first device, and the first signature.

The group request message further carries the identity of the first device, and the identity of the each second device.

The group request message further carries at least one of: a group identity, the first security parameter corresponding to the each second device, and the public key of the first device.

The group request message further carries uplink encrypted information corresponding to the each second device. The second processing unit is configured to decrypt the uplink encrypted information corresponding to the each second device to obtain uplink plaintext data corresponding to the each second device.

The second communication unit is configured to send a group response message to the first device, wherein the group response message carries a second signature for authenticating the authentication functional entity.

The group response message further carries an identity of the authentication functional entity.

The second signature is calculated based on a private key of the authentication functional entity and the identity of the authentication functional entity.

The group response message further carries a second security parameter calculated based on a second random number generated by the authentication functional entity.

The second signature is calculated based on the private key of the authentication functional entity, the identity of the authentication functional entity, and the second security parameter.

The second processing unit is configured to calculate a first communication key based on the second random number and the group security parameter, wherein the first communication key is used for communication between the first device and the authentication functional entity.

The group response message further carries downlink encrypted information corresponding to the each second device, the downlink encrypted information of the each second device is obtained by encrypting downlink plaintext data of the each second device based on a second communication key corresponding to the each second device, and the second communication key corresponding to the each second device is calculated based on the second random number and the first security parameter corresponding to the each second device.

The group response message further carries the second communication key corresponding to the each second device.

The first device includes one of: a terminal, and an access network device. The second device includes a zero-power device. The authentication functional entity is deployed in at least one of: an application function (AF), an access and mobility management function (AMF), a session management function (SMF), an authentication service function (AUSF), a unified data management function (UDM), a unified data storage (UDR), a home subscription system (HSS), an authentication credential storage and processing function (ARPF), a guidance service function (BSF), a security anchor point function (SEAF), and a dedicated network element of core network.

FIG. 13 is a schematic diagram of a composition structure of a second device according to an embodiment of the present disclosure, including:

The third communication unit 1301 is configured to send an authentication request to the first device, wherein the authentication request carries a first security parameter corresponding to the target second device, and the first security parameter corresponding to the target second device is used to calculate a first signature.

The first security parameter corresponding to the target second device is calculated based on a first random number generated by the target second device.

The authentication request further carries an identity of the target second device.

The authentication request further carries a group identity.

The authentication request further carries uplink encrypted information obtained by encrypting the first random number based on a public key of the authentication functional entity.

The uplink encrypted information is obtained by encrypting the first random number and uplink plaintext data based on the public key of the authentication functional entity.

The public key of the authentication functional entity is preconfigured.

As shown in FIG. 13, the second device further includes a third processing unit 1302.

The third processing unit is configured to calculate a second communication key based on a second security parameter and the first random number;

The third communication unit is configured to receive an authentication response from the first device, wherein the authentication response carries the second security parameter.

The authentication response further carries downlink encrypted information. The third processing unit is configured to decrypt the downlink encrypted information based on the second communication key to obtain downlink plaintext information.

The third communication unit is configured to receive a trigger message from the first device, wherein the trigger message is configured to trigger the target second device to send the authentication request.

The first device includes one of: a terminal, and an access network device. The second device includes a zero-power device.

An embodiment of the present disclosure further proposes a first device including:
a first communication unit, configured to receive a group response message from an authentication functional entity, wherein the group response message carries a second signature for authenticating the authentication functional entity.

The group response message further carries an identity of the authentication functional entity.

The first device further includes a first processing unit.

The first processing unit is configured to authenticate the authentication functional entity based on a public key of the authentication functional entity, the identity of the authentication functional entity and the second signature.

The group response message further carries a second security parameter.

The first processing unit is configured to authenticate the authentication functional entity based on the public key of the authentication functional entity, the identity of the authentication functional entity, the second signature, and a second security parameter.

The first communication unit is configured to receive authentication requests from a plurality of second devices, wherein the authentication request of each second device amomg the plurality of second devices carries an identity of each second device; send a group request message to the authentication functional entity, wherein the group request message carries identities of the plurality of second devices and an identity of the first device.

The first communication unit is configured to send a trigger message to the each second device, wherein the trigger message is configured to trigger the each second device to send the authentication request.

An embodiment of the present disclosure further proposes an authentication functional entity, the authentication functional entity including:
a second communication unit, configured to send a group response message to a first device, wherein the group response message carries a second signature for authenticating the authentication functional entity.

The group response message further carries an identity of the authentication functional entity.

The second signature is calculated based on a private key of the authentication functional entity and the identity of the authentication functional entity.

The group response message further carries a second security parameter calculated based on a second random number generated by the authentication functional entity.

The second signature is calculated based on the private key of the authentication functional entity, the identity of the authentication functional entity, and the second security parameter.

The second communication unit is configured to receive a group request message from the first device, wherein the group request message carries identities of a plurality of second devices and an identity of the first device.

The devices according to the embodiments of the present disclosure can realize the corresponding function of each device in the above-described embodiments of the authentication methods. The corresponding processes, functions, implementations, and beneficial effects of each module (sub-module, unit, component, etc.) in the devices may refer to those in the above-described method embodiments, and will not be repeatedly described here. The functions described with respect to each module (sub-module, unit, component, etc.) in the devices of the embodiments may be implemented by different modules (sub-module, unit, component, etc.), or may be implemented by the same module (sub-module, unit, component, etc.).

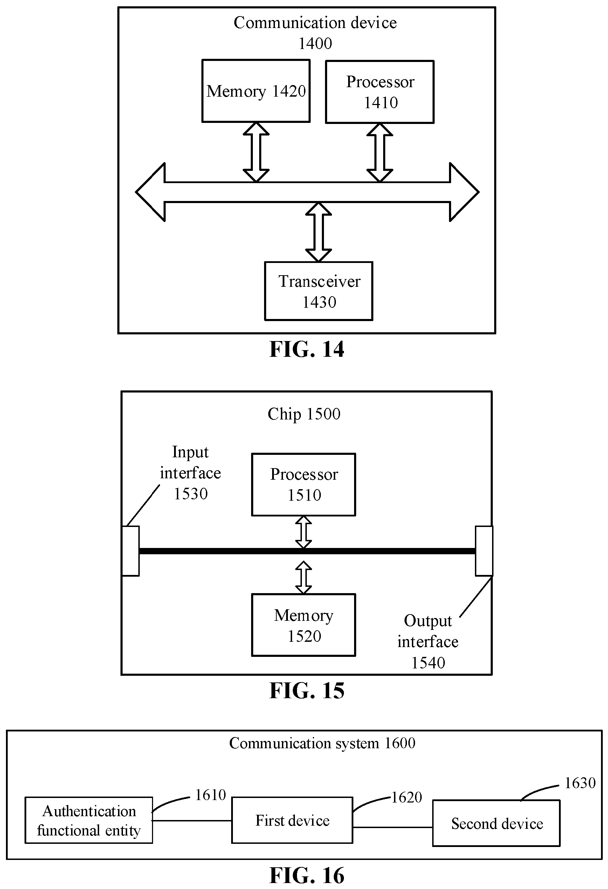

FIG. 14 is a schematic structural diagram of a communication device 1400 according to an embodiment of the present disclosure. The communication device 1400 includes a processor 1410 that may call and run a computer program from a memory to cause the communication device 1400 to implement the methods in the embodiments of the present disclosure.

In a possible implementation, the communication device 1400 may further include a memory 1420. Here, the processor 1410 may call and run a computer program from the memory 1420 to cause the communication device 1400 to implement the methods in the embodiments of the present disclosure. The memory 1420 may be a separate device independent of the processor 1410 or may be integrated in the processor 1410.

In a possible implementation, the communication device 1400 may further include a transceiver 1430 that may be controlled by the processor 1410 to communicate with other devices, in particular, transmitting information or data to, or receiving information or data from other devices. Here, the transceiver 1430 may include a transmitter and a receiver. The transceiver 1430 may further include antennas, and the number of antennas may be one or more.

An embodiment of the present disclosure provides a first device which includes: a processor, and a memory in communication with the processor. The memory is configured to store instructions that, when executed by the processor, cause the first device to perform: receiving authentication requests from a plurality of second devices, wherein the authentication request of each second device amomg the plurality of second devices carries a first security parameter; sending a group request message to an authentication functional entity, wherein the group request message carries a first signature for authenticating the plurality of second devices, and the first signature is calculated based on the first security parameter corresponding to the each second device.

The first signature is calculated based on a private key of the first device and a group security parameter, wherein the group security parameter is calculated based on the first security parameter corresponding to the each second device.

The group request message further carries the group security parameter.

The first signature is calculated based on the private key of the first device, the group security parameter, an identity of the each second device, and an identity of the first device.

The authentication request of each second device further carries the identity of the each second device.

The group request message further carries the identity of the first device, and the identity of the each second device.

The authentication request of each second device further carries a group identity.

The group request message further carries at least one of: the group identity, the first security parameter corresponding to the each second device, and a public key of the first device.

The instructions cause the first device to perform: receiving a group response message from the authentication functional entity, wherein the group response message carries a second signature for authenticating the authentication functional entity.

The group response message further carries an identity of the authentication functional entity.

The instructions cause the first device to perform: authenticating the authentication functional entity based on a public key of the authentication functional entity, an identity of the authentication functional entity and the second signature.

The group response message further carries a second security parameter.

The instructions cause the first device to perform: authenticating the authentication functional entity based on the public key of the authentication functional entity, the identity of the authentication functional entity, the second signature, the second security parameter.

The authentication request of the each second device further carries uplink encrypted information corresponding to the each second device.

The instruction causes the first device to decrypt uplink encrypted information corresponding to the each second device based on the public key of the authentication functional entity to obtain a first random number corresponding to the each second device.

The instructions cause the first device to perform: calculating a first communication key based on the second security parameter and the first random number corresponding to the each second device, wherein the first communication key is used for communication between the first device and the authentication functional entity.

The group request message further carries uplink encrypted information corresponding to the each second device.

The instructions cause the first device to perform: sending an authentication response to the each second device, wherein the authentication response corresponding to the each second device carries the second security parameter.

The group response message further carries downlink encrypted information of the each second device; and the authentication response corresponding to the each second device further carries downlink encrypted information.

The group response message further carries a second communication key corresponding to the each second device.

The public key of the authentication functional entity is preconfigured.

The instructions cause the first device to perform: sending a trigger message to the each second device, wherein the trigger message is used to trigger the each second device to send the authentication request.

The first device includes one of: a terminal, and an access network device. The second device includes a zero-power device. The authentication functional entity is deployed in at least one of: an application function (AF), an access and mobility management function (AMF), a session management function (SMF), an authentication service function (AUSF), a unified data management function (UDM), a unified data storage (UDR), a home subscription system (HSS), an authentication credential storage and processing function (ARPF), a guidance service function (BSF), a security anchor point function (SEAF), and a dedicated network element of core network.

An embodiment of the present disclosure provides an authentication functional entity, including a processor and a memory in communication with the processor. The memory is configured to store instructions that, when executed by the processor, cause the authentication functional entity to perform: receiving a group request message from a first device, wherein the group request message carries a first signature for authenticating a plurality of second devices, and the first signature is calculated based on a first security parameter corresponding to the each second device.

The group request message further carries a group security parameter. The instructions cause the authentication functional entity to perform: authenticating the plurality of second devices based on a public key of the first device, the group security parameter and the first signature.

The instructions cause the authentication functional entity to perform: authenticating the plurality of second devices based on the public key of the first device, the group security parameter, an identity of each second device, an identity of the first device, and the first signature.

The group request message further carries the identity of the first device, and the identity of the each second device.

The group request message further carries at least one of: a group identity, the first security parameter corresponding to the each second device, and the public key of the first device.

The group request message further carries uplink encrypted information corresponding to the each second device. The instruction causes the authentication functional entity to perform: decrypting the uplink encrypted information corresponding to the each second device to obtain uplink plaintext data corresponding to the each second device.

The instructions cause the authentication functional entity to perform: sending a group response message to the first device, wherein the group response message carries a second signature for authenticating the authentication functional entity.

The group response message further carries an identity of the authentication functional entity.

The second signature is calculated based on a private key of the authentication functional entity and the identity of the authentication functional entity.

The group response message further carries a second security parameter calculated based on a second random number generated by the authentication functional entity.

The second signature is calculated based on the private key of the authentication functional entity, the identity of the authentication functional entity, and the second security parameter.

The instructions cause the authentication functional entity to perform: calculating a first communication key based on the second random number and the group security parameter, wherein the first communication key is used for communication between the first device and the authentication functional entity.

The group response message further carries downlink encrypted information corresponding to the each second device. The downlink encrypted information of each second device is obtained by encrypting downlink plaintext data of the each second device based on a second communication key corresponding to the each second device, and the second communication key corresponding to the each second device is calculated based on the second random number and the first security parameter corresponding to the each second device.

The group response message further carries the second communication key corresponding to the each second device.

The first device includes one of: a terminal, and an access network device. The second device comprises a zero-power device. The authentication functional entity is deployed in at least one of: an application function (AF), an access and mobility management function (AMF), a session management function (SMF), an authentication service function (AUSF), a unified data management function (UDM), a unified data storage (UDR), a home subscription system (HSS), an authentication credential storage and processing function (ARPF), a guidance service function (BSF), a security anchor point function (SEAF), and a dedicated network element of core network.

An embodiment of the present disclosure provides a second device, including: a processor, and a memory in communication with the processor. The memory is configured to store instructions that, when executed by the processor, causes the second device to perform: sending an authentication request to a first device, wherein the authentication request carries a first security parameter corresponding to the target second device, and the first security parameter corresponding to the target second device is used to calculate a first signature.

The first security parameter corresponding to the target second device is calculated based on a first random number generated by the target second device.

The authentication request further carries an identity of the target second device.

The authentication request further carries a group identity.

The authentication request further carries uplink encrypted information obtained by encrypting the first random number based on a public key of the authentication functional entity.

The uplink encrypted information is obtained by encrypting the first random number and uplink plaintext data based on the public key of the authentication functional entity.

The public key of the authentication functional entity is preconfigured.

The instructions cause the second device to perform: calculating a second communication key based on a second security parameter and the first random number; and receiving an authentication response from the first device, wherein the authentication response carries the second security parameter.

The authentication response further carries downlink encrypted information. The instructions cause the second device to decrypt the downlink encrypted information based on the second communication key to obtain downlink plaintext information.

The instructions cause the second device to perform: receiving a trigger message from the first device, wherein the trigger message is used to trigger the target second device to send the authentication request.

The first device includes one of: a terminal, and an access network device. The second device includes a zero-power device.

An embodiment of the present disclosure further provides a first device, including: a processor, and a memory in communication with the processor. The memory is configured to store instructions that, when executed by the processor, cause the first device to perform: receiving a group response message from an authentication functional entity, wherein the group response message carries a second signature for authenticating the authentication functional entity.

The group response message further carries an identity of the authentication functional entity.

The instructions cause the first device to perform: authenticating the authentication functional entity based on a public key of the authentication functional entity, the identity of the authentication functional entity and the second signature.

The group response message further carries a second security parameter.

The instructions cause the first device to perform: authenticating the authentication functional entity based on the public key of the authentication functional entity, the identity of the authentication functional entity, the second signature, and the second security parameter.

The instructions cause the first device to perform: receiving authentication requests from a plurality of second devices, wherein the authentication request of each second device among the plurality of second devices carries an identity of each second device; and sending a group request message to the authentication functional entity, wherein the group request message carries identities of the plurality of second devices and an identity of the first device.

The instructions cause the first device to perform: sending a trigger message to the each second device, wherein the trigger message is used to trigger the each second device to send the authentication request.

An embodiment of the present disclosure further provides an authentication functional entity, including: a processor, and a memory in communication with the processor. The memory is configured to store instructions that, when executed by the processor, cause the authentication functional entity to perform: sending a group response message to a first device, wherein the group response message carries a second signature for authenticating the authentication functional entity.

The group response message further carries an identity of the authentication functional entity.

The second signature is calculated based on a private key of the authentication functional entity and the identity of the authentication functional entity.

The group response message further carries a second security parameter calculated based on a second random number generated by the authentication functional entity.

The second signature is calculated based on the private key of the authentication functional entity, the identity of the authentication functional entity, and the second security parameter.

The instructions cause the authentication functional entity to perform: receiving a group request message from the first device, wherein the group request message carries identities of a plurality of second devices and an identity of the first device.

FIG.15 is a schematic structural diagram of a chip 1500 according to an embodiment of the present disclosure. The chip 1500 includes a processor 1510, which can call and run a computer program from a memory to implement the methods in the embodiments of the present disclosure. In a possible implementation, the chip 1500 may further include a memory 1520. Here, the processor 1510 may call and run a computer program from the memory 1520 to implement the methods executed by the access network device or the core network side device in the embodiments of the present disclosure. The memory 1520 may be a separate device independent of the processor 1510 or may be integrated in the processor 1510. In a possible implementation, the chip 1500 may further include an input interface 1530. The processor 1510 may control the input interface 1530 to communicate with other devices or chips, specifically, the input interface 1530 may acquire information or data from other devices or chips. In a possible implementation, the chip 1500 may further include an output interface 1540. The processor 1510 may control the output interface 1540 to communicate with other devices or chips, specifically, the output interface 1540 may output information or data to other devices or chips. In a possible implementation mode, the chip may be applied to each device in the embodiments of the present disclosure, and may implement corresponding processes implemented by each device in each method of the embodiments of the present disclosure, and will not be repeatedly described here for the sake of simplicity. It should be understood that the chip mentioned in the embodiments of the present disclosure may also be referred to as a system-on-chip, a system chip, a chip system, or an on-chip system chip, etc.

The processors mentioned above may be general-purpose processors, digital signal processors, off-the-shelf programmable gate arrays, application specific integrated circuits or other programmable logic devices, transistor logic devices, discrete hardware components, and the like. The general-purpose processor mentioned above may be a microprocessor or any conventional processor or the like. The memory mentioned above may be a volatile memory or a non-volatile memory, or may include both volatile and non-volatile memory. The non-volatile memory may be a read-only memory, a programmable read-only memory, an erasable programmable read-only memory, an electrically erasable programmable read-only memory, or a flash memory. The volatile memory may be a random access memory.

It should be understood that the aforementioned memory is an illustrative but non-limiting example; for instance, the memory in the embodiments may also be a static random access memory (SRAM), a dynamic random access memory (DRAM), or the like. That is to say, the memory in the embodiments of the present disclosure is intended to include, but is not limited to, these and any other suitable types of memory.

FIG.16 is a schematic block diagram of a communication system 1600 according to an embodiment of the present disclosure. The communication system 1600 includes a first device 1620, a second device 1630, and an authentication functional entity 1610. In the embodiments described above, it may be implemented in whole or in part by software, hardware, firmware, or any combination thereof. When implemented using software, it may be implemented in whole or in part in the form of a computer program product. The computer program product includes one or more computer instructions. When the computer program instructions are loaded and executed on a computer, the processes or functions according to the embodiments of the present disclosure are generated in whole or in part. The computer may be a general-purpose computer, a special-purpose computer, a computer network, or other programmable device. The computer instructions may be stored in a computer-readable storage medium or transmitted from one computer-readable storage medium to another computer-readable storage medium, for example, the computer instructions may be transmitted from a website site, computer, server, or data center by wired (e.g., coaxial cable, optical fiber, digital subscriber line) or wireless (e.g., infrared, wireless, microwave, etc.) means to another website site, computer, server, or data center. The computer-readable storage medium may be any available medium accessible by a computer or a data storage device such as a server, a data center, or the like that contains one or more available media integrations. The available medium may be a magnetic medium (such as a hard disk), or a semiconductor medium (such as a solid state drive), or the like.

It should be understood that in various embodiments of the present disclosure, the sequence numbers of the above-described processes do not mean the sequence of execution, and the sequence of execution of each process should be determined by its function and internal logic, and should not constitute any limitation on the implementation of the embodiments of the present disclosure.

Those skilled in the art will clearly understand that for convenience and conciseness of the description, the specific working processes of the systems, devices and units described above may refer to the corresponding processes in the aforementioned method embodiments, and will not be repeatedly described here.

The above is merely a specific embodiment of the present disclosure, but the scope of protection of the present disclosure is not limited thereto. Any person skilled in the art can easily think of changes or substitutions within the technical scope disclosed in the present disclosure, and should be covered within the scope of protection of the present disclosure. Therefore, the scope of protection of this application should be based on the scope of protection of this claim.

## Claims

1. An authentication method implemented by a first device, comprising:
receiving authentication requests from a plurality of second devices, wherein the authentication request of each second device among the plurality of second devices carries a first security parameter; and
sending a group request message to an authentication functional entity, wherein the group request message carries a first signature for authenticating the plurality of second devices, and the first signature is calculated based on the first security parameter corresponding to the each second device.

2. The method according to claim 1, wherein the first signature is calculated based on a private key of the first device and a group security parameter, wherein the group security parameter is calculated based on the first security parameter corresponding to the each second device.

3. The method according to claim 2, wherein the group request message further carries the group security parameter.

4. The method according to claim 2 or 3, wherein the first signature is calculated based on the private key of the first device, the group security parameter, an identity of the each second device, and an identity of the first device.

5. The method according to any one of claims 1 to 4, wherein the authentication request of the each second device further carries an identity of the each second device.

6. The method according to claim 5, wherein the group request message further carries an identity of the first device and the identity of the each second device.

7. The method according to claim 6, wherein the authentication request of the each second device further carries a group identity.

8. The method according to claim 7, wherein the group request message further carries at least one of: the group identity, the first security parameter corresponding to the each second device, and a public key of the first device.

9. The method according to any one of claims 1 to 8, further comprising:
receiving a group response message from the authentication functional entity, wherein the group response message carries a second signature for authenticating the authentication functional entity.

10. The method according to claim 9, wherein the group response message further carries an identity of the authentication functional entity.

11. The method according to claim 10, further comprising:
authenticating the authentication functional entity based on a public key of the authentication functional entity, the identity of the authentication functional entity, and the second signature.

12. The method according to claim 11, wherein the group response message further carries a second security parameter.

13. The method according to claim 12, wherein authenticating the authentication functional entity based on the public key of the authentication functional entity, the identity of the authentication functional entity and the second signature comprises:
authenticating the authentication functional entity based on the public key of the authentication functional entity, the identity of the authentication functional entity, the second signature, and the second security parameter.

14. The method according to claim 12 or 13, wherein the authentication request of the each second device further carries uplink encrypted information corresponding to the each second device.

15. The method according to claim 14, further comprising:
decrypting the uplink encrypted information corresponding to the each second device based on the public key of the authentication functional entity to obtain a first random number corresponding to the each second device.

16. The method according to claim 15, further comprising:
calculating a first communication key based on the second security parameter and the first random number corresponding to the each second device, wherein the first communication key is used for communication between the first device and the authentication functional entity.

17. The method according to any one of claims 14 to 16, wherein the group request message further carries the uplink encrypted information corresponding to the each second device.

18. The method according to any one of claims 12 to 17, further comprising:
sending an authentication response to the each second device, wherein the authentication response corresponding to the each second device carries the second security parameter.

19. The method according to claim 18, wherein the group response message further carries downlink encrypted information of the each second device; and the authentication response corresponding to the each second device further carries the downlink encrypted information.

20. The method according to any one of claims 9 to 19, wherein the group response message further carries a second communication key corresponding to the each second device.

21. The method according to any one of claims 11 to 19, wherein the public key of the authentication functional entity is preconfigured.

22. The method according to any one of claims 1 to 21, further comprising:
sending a trigger message to the each second device, wherein the trigger message is used to trigger the each second device to send the authentication request.

23. The method according to any one of claims 1 to 22, wherein the first device comprises one of: a terminal, and an access network device; the second device comprises a zero-power device; and the authentication functional entity is deployed in at least one of: an Application Function (AF), an Access and Mobility Management Function (AMF), a Session Management Function (SMF), an Authentication Server Function (AUSF), a Unified Data Management (UDM), a Unified Data Repository (UDR), a Home Subscriber System (HSS), an Authentication Credential Repository and Processing Function (ARPF), a Bootstrapping Server Function (BSF), a Security Anchor Function (SEAF), and a dedicated network element of core network.

24. An authentication method implemented by an authentication functional entity, comprising:
receiving a group request message from a first device, wherein the group request message carries a first signature for authenticating a plurality of second devices, and the first signature is calculated based on a first security parameter corresponding to each second device among the plurality of second devices.

25. The method according to claim 24, wherein the group request message further carries a group security parameter; and
the method further comprises: authenticating the plurality of second devices based on a public key of the first device, the group security parameter, and the first signature.

26. The method according to claim 25, wherein authenticating the plurality of second devices based on the public key of the first device, the group security parameter and the first signature comprises:
authenticating the plurality of second devices based on the public key of the first device, the group security parameter, an identity of the each second device, an identity of the first device, and the first signature.

27. The method according to any one of claims 24 to 26, wherein the group request message further carries: the identity of the first device, and the identity of the each second device.

28. The method according to any one of claims 24 to 27, wherein the group request message further carries at least one of: a group identity, the first security parameter corresponding to the each second device, and a public key of the first device.

29. The method according to any one of claims 24 to 28, wherein the group request message further carries uplink encrypted information corresponding to the each second device; and
the method further comprises: decrypting, by the authentication functional entity, the uplink encrypted information corresponding to the each second device to obtain uplink plaintext data corresponding to the each second device.

30. The method according to any one of claims 24 to 29, further comprising:
sending a group response message to the first device, wherein the group response message carries a second signature for authenticating the authentication functional entity.

31. The method according to claim 30, wherein the group response message further carries an identity of the authentication functional entity.

32. The method according to claim 31, wherein the second signature is calculated based on a private key of the authentication functional entity and the identity of the authentication functional entity.

33. The method according to claim 32, wherein the group response message further carries a second security parameter, wherein the second security parameter is calculated based on a second random number, and the second random number is generated by the authentication functional entity.

34. The method according to claim 33, wherein the second signature is calculated based on the private key of the authentication functional entity, the identity of the authentication functional entity, and the second security parameter.

35. The method according to claim 33 or 34, further comprising:
calculating a first communication key based on the second random number and the group security parameter, wherein the first communication key is used for communication between the first device and the authentication functional entity.

36. The method according to any one of claims 33 to 35, wherein the group response message further carries downlink encrypted information corresponding to the each second device, wherein the downlink encrypted information of the each second device is obtained by encrypting downlink plaintext data of the each second device based on a second communication key corresponding to the each second device, and the second communication key corresponding to the each second device is calculated based on the second random number and the first security parameter corresponding to the each second device.

37. The method according to claim 36, wherein the group response message further carries the second communication key corresponding to the each second device.

38. The method according to any one of claims 24 to 37, wherein the first device comprises one of: a terminal, and an access network device; the second device comprises a zero-power device; and the authentication functional entity is deployed in at least one of: an Application Function (AF), an Access and Mobility Management Function (AMF), a Session Management Function (SMF), an Authentication Server Function (AUSF), a Unified Data Management (UDM), a Unified Data Repository (UDR), a Home Subscriber System (HSS), an Authentication Credential Repository and Processing Function (ARPF), a Bootstrapping Server Function (BSF), a Security Anchor Function (SEAF), and a dedicated network element of core network.

39. An authentication method implemented by a target second device, comprising:
sending an authentication request to a first device, wherein the authentication request carries a first security parameter corresponding to the target second device, and the first security parameter corresponding to the target second device is used to calculate a first signature.

40. The method according to claim 39, wherein the first security parameter corresponding to the target second device is calculated based on a first random number, and the first random number is generated by the target second device.

41. The method according to claim 39 or 40, wherein the authentication request further carries an identity of the target second device.

42. The method according to any one of claims 39 to 41, wherein the authentication request further carries a group identity.

43. The method according to any one of claims 39 to 42, wherein the authentication request further carries uplink encrypted information, and the uplink encrypted information is obtained by encrypting the first random number based on a public key of an authentication functional entity.

44. The method according to claim 43, wherein the uplink encrypted information is obtained by encrypting the first random number and uplink plaintext data based on the public key of the authentication functional entity.

45. The method according to claim 43 or 44, wherein the public key of the authentication functional entity is preconfigured.

46. The method according to any one of claims 39 to 45, further comprising:
receiving an authentication response from the first device, wherein the authentication response carries a second security parameter; and
calculating a second communication key based on the second security parameter and the first random number.

47. The method according to claim 46, wherein the authentication response further carries downlink encrypted information; and
the method further comprises: decrypting the downlink encrypted information based on the second communication key to obtain downlink plaintext information.

48. The method according to any one of claims 39 to 47, further comprising:
receiving a trigger message from the first device, wherein the trigger message is used to trigger the target second device to send the authentication request.

49. The method according to any one of claims 39 to 48, wherein the first device comprises one of: a terminal, and an access network device; and the second device comprises a zero-power device.

50. An authentication method implemented by a first device, comprising:
receiving a group response message from an authentication functional entity, wherein the group response message carries a second signature for authenticating the authentication functional entity.

51. The method according to claim 50, wherein the group response message further carries an identity of the authentication functional entity.

52. The method according to claim 51, further comprising:
authenticating the authentication functional entity based on a public key of the authentication functional entity, the identity of the authentication functional entity, and the second signature.

53. The method according to claim 52, wherein the group response message further carries a second security parameter.

54. The method according to claim 53, wherein authenticating the authentication functional entity based on the public key of the authentication functional entity, the identity of the authentication functional entity and the second signature comprises:
authenticating the authentication functional entity based on the public key of the authentication functional entity, the identity of the authentication functional entity, the second signature, and the second security parameter.

55. The method according to any one of claims 50 to 54, further comprising:
receiving authentication requests from a plurality of second devices, wherein the authentication request of each second device among the plurality of second devices carries an identity of the each second device; and
sending a group request message to the authentication functional entity, wherein the group request message carries identitys of the plurality of second devices and an identity of the first device.

56. The method according to claim 55, further comprising:
sending a trigger message to the each second device, wherein the trigger message is used to trigger the each second device to send the authentication request.

57. An authentication method implemented by an authentication functional entity, comprising:
sending a group response message to a first device, wherein the group response message carries a second signature for authenticating the authentication functional entity.

58. The method according to claim 57, wherein the group response message further carries an identity of the authentication functional entity.

59. The method according to claim 58, wherein the second signature is calculated based on a private key of the authentication functional entity and the identity of the authentication functional entity.

60. The method according to claim 59, wherein the group response message further carries a second security parameter, wherein the second security parameter is calculated based on a second random number, and the second random number is generated by the authentication functional entity.

61. The method according to claim 60, wherein the second signature is calculated based on the private key of the authentication functional entity, the identity of the authentication functional entity, and the second security parameter.

62. The method according to any one of claims 57 to 61, further comprising:
receiving a group request message from the first device, wherein the group request message carries identitys of a plurality of second devices and an identity of the first device.

63. A first device, comprising:
a first communication unit, configured to receive authentication requests from a plurality of second devices, wherein the authentication request of each second device among the plurality of second devices carries a first security parameter; and send a group request message to an authentication functional entity, wherein the group request message carries a first signature for authenticating the plurality of second devices, and the first signature is calculated based on the first security parameter corresponding to the each second device.

64. The first device according to claim 63, wherein the first signature is calculated based on a private key of the first device and a group security parameter, wherein the group security parameter is calculated based on the first security parameter corresponding to the each second device.

65. The first device according to claim 64, wherein the group request message further carries the group security parameter.

66. The first device according to claim 64 or 65, wherein the first signature is calculated based on the private key of the first device, the group security parameter, an identity of the each second device, and an identity of the first device.

67. The first device according to any one of claims 63 to 66, wherein the authentication request of the each second device further carries an identity of the each second device.

68. The first device according to claim 67, wherein the group request message further carries an identity of the first device and the identity of the each second device.

69. The first device according to claim 68, wherein the authentication request of the each second device further carries a group identity.

70. The first device according to claim 69, wherein the group request message further carries at least one of: the group identity, the first security parameter corresponding to the each second device, and a public key of the first device.

71. The first device according to any one of claims 63 to 70, wherein the first communication unit is further configured to receive a group response message from the authentication functional entity, wherein the group response message carries a second signature for authenticating the authentication functional entity.

72. The first device according to claim 71, wherein the group response message further carries an identity of the authentication functional entity.

73. The first device according to claim 72, further comprising:
a first processing unit, configured to authenticate the authentication functional entity based on a public key of the authentication functional entity, the identity of the authentication functional entity, and the second signature.

74. The first device according to claim 73, wherein the group response message further carries a second security parameter.

75. The first device according to claim 74, wherein the first processing unit is configured to authenticate the authentication functional entity based on the public key of the authentication functional entity, the identity of the authentication functional entity, the second signature, and the second security parameter.

76. The first device according to claim 74 or 75, wherein the authentication request of the each second device further carries uplink encrypted information corresponding to the each second device.

77. The first device according to claim 76, wherein the first processing unit is further configured to decrypt the uplink encrypted information corresponding to the each second device based on the public key of the authentication functional entity to obtain a first random number corresponding to the each second device.

78. The first device according to claim 77, wherein the first processing unit is further configured to calculate a first communication key based on the second security parameter and the first random number corresponding to the each second device, wherein the first communication key is used for communication between the first device and the authentication functional entity.

79. The first device according to any one of claims 76 to 78, wherein the group request message further carries the uplink encrypted information corresponding to the each second device.

80. The first device according to any one of claims 74 to 79, wherein the first communication unit is further configured to send an authentication response to the each second device, wherein the authentication response corresponding to the each second device carries the second security parameter.

81. The first device according to claim 80, wherein the group response message further carries downlink encrypted information of the each second device; and the authentication response corresponding to the each second device further carries the downlink encrypted information.

82. The first device according to any one of claims 71 to 81, wherein the group response message further carries a second communication key corresponding to the each second device.

83. The first device according to any one of claims 73 to 81, wherein the public key of the authentication functional entity is preconfigured.

84. The first device according to any one of claims 63 to 83, wherein the first communication unit is further configured to send a trigger message to the each second device, wherein the trigger message is used to trigger the each second device to send the authentication request.

85. The first device according to any one of claims 63 to 84, wherein the first device comprises one of: a terminal, and an access network device; the second device comprises a zero-power device; and the authentication functional entity is deployed in at least one of: an Application Function (AF), an Access and Mobility Management Function (AMF), a Session Management Function (SMF), an Authentication Server Function (AUSF), a Unified Data Management (UDM), a Unified Data Repository (UDR), a Home Subscriber System (HSS), an Authentication Credential Repository and Processing Function (ARPF), a Bootstrapping Server Function (BSF), a Security Anchor Function (SEAF), and a dedicated network element of core network.

86. An authentication functional entity, comprising:
a second communication unit, configured to receive a group request message from a first device, wherein the group request message carries a first signature for authenticating a plurality of second devices, and the first signature is calculated based on a first security parameter corresponding to each second device among the plurality of second devices.

87. The authentication functional entity according to claim 86, wherein the group request message further carries a group security parameter; and the authentication functional entity further comprises:
a second processing unit, configured to authenticate the plurality of second devices based on a public key of the first device, the group security parameter, and the first signature.

88. The authentication functional entity according to claim 87, wherein the second processing unit is configured to authenticate the plurality of second devices based on the public key of the first device, the group security parameter, an identity of the each second device, an identity of the first device, and the first signature.

89. The authentication functional entity according to any one of claims 86 to 88, wherein the group request message further carries: the identity of the first device, and the identity of the each second device.

90. The authentication functional entity according to any one of claims 86 to 89, wherein the group request message further carries at least one of: a group identity, the first security parameter corresponding to the each second device, and a public key of the first device.

91. The authentication functional entity according to any one of claims 86 to 90, wherein the group request message further carries uplink encrypted information corresponding to the each second device; and the second processing unit is further configured to decrypt the uplink encrypted information corresponding to the each second device to obtain uplink plaintext data corresponding to the each second device.

92. The authentication functional entity according to any one of claims 86 to 91, wherein the second communication unit is further configured to send a group response message to the first device, wherein the group response message carries a second signature for authenticating the authentication functional entity.

93. The authentication functional entity according to claim 92, wherein the group response message further carries an identity of the authentication functional entity.

94. The authentication functional entity according to claim 93, wherein the second signature is calculated based on a private key of the authentication functional entity and the identity of the authentication functional entity.

95. The authentication functional entity according to claim 94, wherein the group response message further carries a second security parameter, wherein the second security parameter is calculated based on a second random number, and the second random number is generated by the authentication functional entity.

96. The authentication functional entity according to claim 95, wherein the second signature is calculated based on the private key of the authentication functional entity, the identity of the authentication functional entity, and the second security parameter.

97. The authentication functional entity according to claim 95 or 96, wherein the second processing unit is further configured to calculate a first communication key based on the second random number and the group security parameter, wherein the first communication key is used for communication between the first device and the authentication functional entity.

98. The authentication functional entity according to any one of claims 95 to 97, wherein the group response message further carries downlink encrypted information corresponding to the each second device, wherein the downlink encrypted information of the each second device is obtained by encrypting downlink plaintext data of the each second device based on a second communication key corresponding to the each second device, and the second communication key corresponding to the each second device is calculated based on the second random number and the first security parameter corresponding to the each second device.

99. The authentication functional entity according to claim 98, wherein the group response message further carries the second communication key corresponding to the each second device.

100. The authentication functional entity according to any one of claims 86 to 99, wherein the first device comprises one of: a terminal, and an access network device; the second device comprises a zero-power device; and the authentication functional entity is deployed in at least one of: an Application Function (AF), an Access and Mobility Management Function (AMF), a Session Management Function (SMF), an Authentication Server Function (AUSF), a Unified Data Management (UDM), a Unified Data Repository (UDR), a Home Subscriber System (HSS), an Authentication Credential Repository and Processing Function (ARPF), a Bootstrapping Server Function (BSF), a Security Anchor Function (SEAF), and a dedicated network element of core network.

101. A second device, comprising:
a third communication unit, configured to send an authentication request to a first device, wherein the authentication request carries a first security parameter corresponding to the target second device, and the first security parameter corresponding to the target second device is used to calculate a first signature.

102. The second device according to claim 101, wherein the first security parameter corresponding to the target second device is calculated based on a first random number, and the first random number is generated by the target second device.

103. The second device according to claim 101 or 102, wherein the authentication request further carries an identity of the target second device.

104. The second device according to any one of claims 101 to 103, wherein the authentication request further carries a group identity.

105. The second device according to any one of claims 101 to 104, wherein the authentication request further carries uplink encrypted information, and the uplink encrypted information is obtained by encrypting the first random number based on a public key of an authentication functional entity.

106. The second device according to claim 105, wherein the uplink encrypted information is obtained by encrypting the first random number and uplink plaintext data based on the public key of the authentication functional entity.

107. The second device according to claim 105 or 106, wherein the public key of the authentication functional entity is preconfigured.

108. The second device according to any one of claims 101 to 107, further comprising a third processing unit,
wherein the third processing unit is configured to calculate a second communication key based on a second security parameter and the first random number; and
the third communication unit is further configured to receive an authentication response from the first device, wherein the authentication response carries the second security parameter.

109. The second device according to claim 108, wherein the authentication response further carries downlink encrypted information; and the third processing unit is further configured to decrypt the downlink encrypted information based on the second communication key to obtain downlink plaintext information.

110. The second device according to any one of claims 101 to 109, wherein the third communication unit is further configured to receive a trigger message from the first device, wherein the trigger message is used to trigger the target second device to send the authentication request.

111. The second device according to any one of claims 101 to 110, wherein the first device comprises one of: a terminal, and an access network device; and the second device comprises a zero-power device.

112. A first device, comprising:
a first communication unit, configured to receive a group response message from an authentication functional entity, wherein the group response message carries a second signature for authenticating the authentication functional entity.

113. The first device according to claim 112, wherein the group response message further carries an identity of the authentication functional entity.

114. The first device according to claim 113, further comprising:
a first processing unit, configured to authenticate the authentication functional entity based on a public key of the authentication functional entity, the identity of the authentication functional entity, and the second signature.

115. The first device according to claim 114, wherein the group response message further carries a second security parameter.

116. The first device according to claim 115, wherein the first processing unit is configured to authenticate the authentication functional entity based on the public key of the authentication functional entity, the identity of the authentication functional entity, the second signature, and the second security parameter.

117. The first device according to any one of claims 112 to 116, wherein the first communication unit is further configured to receive authentication requests from a plurality of second devices, wherein the authentication request of each second device among the plurality of second devices carries an identity of the each second device; and send a group request message to the authentication functional entity, wherein the group request message carries identitys of the plurality of second devices and an identity of the first device.

118. The first device according to claim 117, wherein the first communication unit is further configured to send a trigger message to the each second device, wherein the trigger message is used to trigger the each second device to send the authentication request.

119. An authentication functional entity, comprising:
a second communication unit, configured to send a group response message to a first device, wherein the group response message carries a second signature for authenticating the authentication functional entity.

120. The authentication functional entity according to claim 119, wherein the group response message further carries an identity of the authentication functional entity.

121. The authentication functional entity according to claim 120, wherein the second signature is calculated based on a private key of the authentication functional entity and the identity of the authentication functional entity.

122. The authentication functional entity according to claim 121, wherein the group response message further carries a second security parameter, wherein the second security parameter is calculated based on a second random number, and the second random number is generated by the authentication functional entity.

123. The authentication functional entity according to claim 122, wherein the second signature is calculated based on the private key of the authentication functional entity, the identity of the authentication functional entity, and the second security parameter.

124. The authentication functional entity according to any one of claims 119 to 123, wherein the second communication unit is further configured to receive a group request message from the first device, wherein the group request message carries identitys of a plurality of second devices and an identity of the first device.

125. A first device, comprising: a transceiver, a processor, and a memory, wherein the memory is configured to store a computer program, and the processor is configured to invoke and run the computer program stored in the memory to cause the first device to perform the method according to any one of claims 1 to 23 or any one of claims 50 to 56.

126. An authentication functional entity, comprising: a transceiver, a processor, and a memory, wherein the memory is configured to store a computer program, and the processor is configured to invoke and run the computer program stored in the memory to cause the authentication functional entity to perform the method according to any one of claims 24 to 38 or any one of claims 57 to 62.

127. A second device, comprising: a transceiver, a processor, and a memory, wherein the memory is configured to store a computer program, and the processor is configured to invoke and run the computer program stored in the memory to cause the second device to perform the method according to any one of claims 39 to 49.

128. A chip, comprising: a processor configured to invoke and run a computer program from a memory to cause a device installed with the chip to perform the method according to any one of claims 1 to 23, any one of claims 24 to 38, any one of claims 39 to 49, any one of claims 50 to 56, or any one of claims 57 to 62.

129. A computer-readable storage medium, configured to store a computer program that, when run by a device, causes the device to perform the method according to any one of claims 1 to 23, any one of claims 24 to 38, any one of claims 39 to 49, any one of claims 50 to 56, or any one of claims 57 to 62.

130. A computer program product, comprising computer program instructions which cause a computer to perform the method according to any one of claims 1 to 23, any one of claims 24 to 38, any one of claims 39 to 49, any one of claims 50 to 56, or any one of claims 57 to 62.

131. A computer program, causing a computer to perform the method according to any one of claims 1 to 23, any one of claims 24 to 38, any one of claims 39 to 49, any one of claims 50 to 56, or any one of claims 57 to 62.
